# EUROPEAN PATENT APPLICATION

(11) **EP 4 507 082 A1**
(43) Date of publication of application: **12.02.2025**
(21) Application number: 22962309.5
(22) Date of filing: 17.10.2022
(51) Int. Cl.: H01M 50/152, H01M 50/179, H01M 50/533

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: CHAI, Zhisheng, Ningde, Fujian 352100 (CN); SUN, Dongsheng, Ningde, Fujian 352100 (CN); CHI, Qingkui, Ningde, Fujian 352100 (CN); XU, Hu, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2022/125784
(87) International publication number: WO 2024/082113

(57) **Abstract**

The present disclosure provides a battery cell, a battery, and an electric device. The battery cell includes an electrode assembly, a current collection member, and a first output electrode and a second output electrode that have opposite polarities. The electrode assembly has a first tab and a second tab that have opposite polarities. The first output electrode and the second output electrode are configured to output electric energy of the battery cell. The current collection member includes an insulation plate, a first current collector, and a second current collector. The insulation plate has a first notch and a second notch that are spaced apart from each other in a circumferential direction of the insulation plate. The first current collector is at least partially accommodated in the first notch and electrically connects the first tab with the first output electrode. The second current collector is at least partially accommodated in the second notch and electrically connects the second tab with the second output electrode. The insulation plate insulates the first current collector from the second current collector.

## Description

### FIELD

The present disclosure relates to the technical field of batteries, and in particularly, to a battery cell, a battery, and an electric device.

### BACKGROUND

Energy conservation and emissions reduction are crucial for sustainable development of the automotive industry. Electric vehicles, with their energy-saving and environmentally friendly advantages, have become an important integral part of the sustainable development of the automotive industry. For electric vehicles, battery technology is a critical factor that influences their development.

Typically, a battery cell is provided with a current collection member. An output electrode of the battery cell is connected to a tab through the current collection member to output electric energy. However, a positive electrode output electrode connected to the battery cell and a current collection member of a negative electrode output electrode are easily in contact with each other, resulting in a short circuit inside the battery cell. Therefore, the battery cell has poor safety performance.

### SUMMARY

The present disclosure aims to at least solve one of the technical problems existing in the prior art. To this end, an objective of the present disclosure is to provide a battery cell, a battery, and an electric device, to effectively improve safety performance of the battery cell.

According to embodiments of a first aspect of the present disclosure, a battery cell is provided. The battery cell includes an electrode assembly, a current collection member, and a first output electrode and a second output electrode that have opposite polarities. The electrode assembly has a first tab and a second tab that have opposite polarities. The first output electrode and the second output electrode are configured to output electric energy of the battery cell. The current collection member includes an insulation plate, a first current collector, and a second current collector. The insulation plate has a first notch and a second notch that are spaced apart from each other in a circumferential direction of the insulation plate. The first current collector is at least partially accommodated in the first notch and electrically connects the first tab with the first output electrode. The second current collector is at least partially accommodated in the second notch and electrically connects the second tab with the second output electrode. The insulation plate insulates the first current collector from the second current collector.

The first current collector and the second current collector of the current collection member in the battery cell of the embodiment are insulated from each other through the insulation plate integrated with the first current collector and the second current collector. In this way, reliability of insulation can be improved. Moreover, the influence of assembly errors or vibration to insulation performance is reduced. Therefore, reliability and safety of operation of the battery cell are improved.

In some embodiments, each of the first current collector and the second current collector includes a tab connection portion and an output electrode connection portion; the tab connection portion of the first current collector is embedded in the first notch and electrically connected to the first tab; the output electrode connection portion of the first current collector is electrically connected to the first output electrode; the tab connection portion of the second current collector is embedded in the second notch and electrically connected to the second tab; and the output electrode connection portion of the second current collector is electrically connected to the second output electrode. The first tab and the first output electrode in the embodiment are connected to different regions on the first current collector, respectively. The second tab and the second output electrode are connected to different regions on the second current collector, respectively. In this way, deformation and damage of the current collection member caused by repeated welding for many times can be prevented.

In some embodiments, a minimum spacing d between the tab connection portion of the first current collector and the tab connection portion of the second current collector is greater than 0 mm. In this way, it is ensured that a distance between the tab connection portion of the first current collector and the tab connection portion of the second current collector maintains in space, thereby achieving insulation.

In some embodiments, each of the first notch and the second notch is in a fan shape; the tab connection portion of the first current collector is matched with the first notch; and the tab connection portion of the second current collector is matched with the second notch. In the embodiment, mounting positions of the tab connection portions of the two current collectors can be easily obtained. Moreover, the tab connection portions of the two current collectors are difficult to be disengaged from the first notch and the second notch, respectively. In this way, reliable fixing is realized.

In some embodiments, the tab connection portion of the first current collector and the tab connection portion of the second current collector are homocentric.

In some embodiments, the tab connection portion of the first current collector includes a first arc-shaped edge and a second arc-shaped edge that are arranged in a radial direction of the tab connection portion of the first current collector; the first arc-shaped edge is closer to a central axis of the electrode assembly than the second arc-shaped edge; a curvature radius of the first arc-shaped edge is r1; and r1 and d satisfy: d≥2/3*r1. According to the embodiment, it can be ensured that the tab connection portions of the two current collectors are spaced apart from each other by a predetermined distance. Each of the tab connection portions of the two current collectors is far away from the tab having a polarity opposite to the tab connection portion. In this way, a short circuit caused by contact is avoided.

In some embodiments, the tab connection portion of the second current collector includes a third arc-shaped edge and a fourth arc-shaped edge that are arranged in a radial direction of the tab connection portion of the second current collector; the third arc-shaped edge is closer to a central axis of the electrode assembly than the fourth arc-shaped edge; a curvature radius of the third arc-shaped edge is r2; and r2 and d satisfy: d≥2/3*r2. According to the embodiment, it can be ensured that the tab connection portions of the two current collectors are spaced apart from each other by a predetermined distance. The tab connection portions of the two current collectors are each far away from the tabs having opposite polarities to the tab connection portions. In this way, the short circuit caused by contact is avoided.

In some embodiments, the battery cell further includes a housing and an end cover. The housing has an opening, and the end cover is configured to cover the opening. The electrode assembly is accommodated in the housing; and the first output electrode is mounted at the end cover and insulated from the end cover. The second output electrode is the end cover. In the embodiment, when a plurality of battery cells is electrically connected to each other, the battery cells do not need to be rotated to adjust a position of the output electrode. In this way, the output electrodes with opposite polarities in the plurality of battery cells can be conveniently connected to each other. Therefore, assembly efficiency is high.

In some embodiments, the first output electrode is mounted in a central region of the end cover. According to the embodiment, a busbar can be more easily connected to the first output electrode of a battery cell and the second output electrode of an adjacent battery cell. Therefore, the assembly is convenient.

In some embodiments, an orthographic projection of the first output electrode on the end cover and an orthographic projection of the output electrode connection portion of the second current collector on the end cover have an overlapping region; and the output electrode connection portion of the first current collector is protruded relative to the tab connection portion of the first current collector.

In the embodiment, considering a case where the orthographic projection of the first output electrode on the end cover and the orthographic projection of the tab connection portion of the second current collector on the end cover have an overlapping region, the output electrode connection portion of the first current collector is protruded relative to the tab connection portion of the first current collector. In this way, a distance between the tab connection portion of the second current collector and the first output electrode in an axial direction of the electrode assembly is increased. The tab connection portion of the second current collector can be disengaged from the first output electrode by the output electrode connection portion of the first current collector, so as to avoid that the second current collector is in contact with the first output electrode to cause a short circuit.

In some embodiments, the output electrode connection portion of the first current collector includes a connection portion and a conductive portion; the connection portion has an end connected to a peripheral side surface of the tab connection portion of the first current collector and another end connected to the conductive portion; and the conductive portion is located between the insulation plate and the first output electrode. In the embodiment, a distance between the first output electrode and the tab connection portion of the second current collector occurs in a height direction of the battery cell, to avoid a short circuit caused by contact.

In some embodiments, a central region of the insulation plate protrudes towards the conductive portion than a peripheral region of the insulation plate and is supported at the conductive portion. In this way, the conductive portion can play a role in supporting the insulation plate. Moreover, the conductive portion can be further lifted. Further, the distance between the first output electrode and the tab connection portion of the second current collector in the height direction of the battery cell can be further increased. Therefore, insulation reliability is improved.

In some embodiments, the insulation plate has a first through hole defined in a central region of the insulation plate, the conductive portion has a second through hole, and the electrode assembly has a center hole defined in a middle of the electrode assembly; an orthographic projection of the first through hole on the end cover in an axial direction of the electrode assembly at least partially overlaps with an orthographic projection of the second through hole on the end cover in the axial direction of the electrode assembly; and/or the orthographic projection of the first through hole on the end cover in the axial direction of the electrode assembly at least partially overlaps with an orthographic projection of the center hole on the end cover in the axial direction of the electrode assembly.

In this way, the first through hole and the center hole are at least partially aligned with the second through hole, so the first through hole, the second through hole, and the center hole are in communication with each other. Thus, an electrolyte in the housing easily flows into the center hole through the second through hole and the first through hole, enabling a center of the electrode assembly also to be fully infiltrated by the electrolyte.

In some embodiments, the electrode assembly further includes a body portion; the first tab and the second tab are connected to the body portion; the first tab and the second tab are bent relative to the body portion and are in a flattened state; and an orthographic projection of each of the first tab and the second tab in the flattened state on the end cover does not overlap with the orthographic projection of the first through hole on the end cover. The first tab and the second tab of the electrode assembly in the embodiment cannot extend into the first through hole, so as to avoid that the second tab is in contact with a periphery of the second through hole on the conductive portion to cause a short circuit inside the battery cell.

In some embodiments, a thickness of the conductive portion is greater than a thickness of the tab connection portion of the first current collector. The embodiment can effectively improve an overcurrent capability of the conductive portion.

In some embodiments, the output electrode connection portion of the second current collector is close to an inner side surface of the housing; the output electrode connection portion of the second current collector is electrically connected to the end cover or the inner side surface of the housing; and the housing is electrically connected to the end cover. The embodiment can improve mounting stability of the current collection member.

In some embodiments, the tab connection portion of the first current collector is surrounded by the insulation plate. According to the embodiment, reliable insulation between the first current collector and the housing can be ensured. Even when the battery cell is vibrated or impacted, the first current collector cannot be in direct contact with the housing. In this way, occurrence of short circuits between the first current collectors with different polarities and the housing can be prevented, thereby improving operation reliability and safety of the battery cell.

In some embodiments, the output electrode connection portion of the second current collector extends in a direction facing away from the electrode assembly. The output electrode connection portion of the second current collector has two unclosed ends. In the embodiment, the output electrode connection portion of the second current collector protrudes relative to the tab connection portion of the second current collector. In this way, a connection between the second current collector and the second tab and a connection between the second current collector and the housing can be effectively separated from each other.

In some embodiments, the output electrode connection portion of the second current collector extends in a direction facing away from the electrode assembly; and the output electrode connection portion of the second current collector is in a closed annular shape and extends in an entire circumferential direction of the housing. In this way, compared with a case where the output electrode connection portion of the second current collector has two unclosed ends, the output electrode connection portion of the second current collector in the embodiment is provided along the entire circumference of the inner side surface of the housing. Moreover, a plurality of connections may be provided between the output electrode connection portion of the second current collector and the inner side surface of the housing. Therefore, the connection between the second current collector and the housing is allowed to be reliable.

In some embodiments, the insulation plate is partially disposed between the output electrode connection portion of the second current collector and the tab connection portion of the first current collector, to insulate the first current collector from the second current collector. In the embodiment, when the output electrode connection portion of the second current collector is in a closed annular shape and is arranged around the circumferential direction of the insulation plate, the insulation plate can separate the tab connection portion of the first current collector from the output electrode connection portion of the second current collector, to prevent a short circuit caused by contact between the tab connection portion of the first current collector and the output electrode connection portion of the second current collector.

In some embodiments, the end cover has an annular protrusion formed at a side of the end cover facing towards an interior of the housing. The output electrode connection portion of the second current collector is located between the housing and the annular protrusion. The annular protrusion of the embodiment can limit the output electrode connection portion of the second current collector to move in a direction perpendicular to the central axis of the electrode assembly. Further, prevention of the contact of the output electrode connection portion of the second current collector with the first current collector caused by the vibration of the battery cell is facilitated.

In some embodiments, in an axial direction of the electrode assembly, a distance between the annular protrusion and the current collection member is greater than or equal to 0.2 mm. In this way, during assembly of the battery cell, when the end cover covers the housing, the annular protrusion of the end cover does not abut against the current collection member, so as to ensure that the end cover and the housing can be sealingly connected to each other.

In some embodiments, the battery cell further includes an insulation member accommodated in the housing. The insulation member is partially located between the end cover and the tab connection portion of the first current collector. In the embodiment, the insulation member can prevent the end cover from being in contact with the tab connection portion of the first current collector, so as not to cause a short circuit.

In some embodiments, the insulation member is of an annular structure. The insulation member surrounds the first output electrode and is partially located between the end cover and the tab connection portion of the second current collector. In this way, the insulation member can insulate and protect at least a part of the first output electrode.

In some embodiments, the tab connection portion of the first current collector and the tab connection portion of the second current collector have a same thickness; and a surface of the tab connection portion of the first current collector facing towards the end cover and a surface of the tab connection portion of the second current collector facing towards the end cover are coplanar with each other. In the embodiment, a surface of the insulation member facing away from the housing may be a plane. In this way, when the insulation member is mounted in the housing, the insulation member can be aligned with the mounting position without the need for positioning. Therefore, the mounting is convenient. Further, the assembly efficiency can be improved.

In some embodiments, the insulation member has a central through hole defined in a middle region of the insulation member; and the output electrode connection portion of the first current collector extends into the central through hole. According to the embodiment, the output electrode connection portion of the first current collector extends into the central through hole. In this way, the insulation member is prevented from interfering with the conductive portion of the first current collector. Moreover, it is ensured that the insulation member cannot be overlapped on the conductive portion of the first current collector when being installed in the housing. Further, it is helpful to ensure that the end cover can tightly cover the opening of the housing.

In some embodiments, an orthographic projection of the output electrode connection portion of the second current collector on the end cover does not overlap with an orthographic projection of the central through hole on the end cover; and a hole wall of the central through hole is closer to a central axis of the electrode assembly than an inner side surface of the output electrode connection portion of the second current collector. In the embodiment, the insulation member partially protrudes from the output electrode connection portion of the second current collector. The insulation member can completely isolate the tab connection portion of the second current collector from an electrode terminal.

In some embodiments, the insulation member has an abutting surface; the abutting surface and a hole wall of the central through hole jointly define a step portion; the abutting surface abuts against a surface of the first output electrode facing towards the electrode assembly; and the step portion is located between the first output electrode and the tab connection portion of the second current collector. In the embodiment, the step portion of the insulation member can provide a stable support for the electrode terminal. Moreover, the step portion can also insulate the first output electrode from the tab connection portion of the second current collector.

In some embodiments, the housing has an end wall facing towards the opening. The end wall protrudes out of the housing to form a reinforcement rib. In this way, strength of the housing can be enhanced. Further, a decrease in a risk of serious deformation of the end wall caused by gas production during operation of the battery cell is facilitated. Furthermore, a reduction in the influence of electrolyte deposition on a cycle life of the battery cell can be beneficial.

In some embodiments, the electrode assembly further includes a body portion; the first tab is connected to the body portion and has an unfolded state and a flattened state. The first tab in the unfolded state is unbent relative to the body portion, and the first tab in the flattened state is bent relative to the body portion. The first tab in the unfolded state has a height h satisfying: r3+h≥D+N, in such a manner that each first tab in the flattened state is in contact with the tab connection portion of the first current collector. The tab connection portion of the first current collector includes a second arc-shaped edge facing away from a central axis of the electrode assembly, where r3 represents a curvature radius of the second arc-shaped edge, D represents a diameter of the electrode assembly, and N represents a positive number.

The embodiment is beneficial to ensuring that a first tab at an outermost ring on the electrode assembly can be electrically connected to the tab connection portion of the first current collector in the flattened state. In this way, all the first tabs on the electrode assembly can be conducted with the first current collector.

In some embodiments, 1mm≤N≤3mm. In the embodiment, a value of a height h of the first tab in the unfolded state may be great. Further, it facilitates ensuring that the first tab at the outermost ring can be in contact with and electrically connected to the tab connection portion of the first current collector after being flattened.

In some embodiments, the electrode assembly has a center hole defined at a middle of the electrode assembly; and a minimum distance d' between the first tab in a flattened state and the second tab in the flattened state is greater than or equal to an aperture of the center hole. The embodiment is beneficial to ensuring that both a first tab closest to the center hole and a second tab closest to the center hole do not extend into the center hole. In this way, the battery cell is prevented from being short-circuited due to contact between the first tab closest to the center hole and the second tab closest to the center hole.

In some embodiments, the insulation plate is integrally formed through injection molding with the first current collector and the second current collector. According to the embodiment, processing and assembling difficulty of each component in the current collection member can be lowered. Therefore, production efficiency of the battery cell is improved. Moreover, firmness of providing the first current collector and the second current collector at the insulation plate can be improved.

According to embodiments of a second aspect of the present disclosure, a battery is provided. The battery includes the battery cell in the above embodiments.

According to embodiments of a third aspect of the present disclosure, an electric device is provided. The electric device includes the battery in the above embodiments. The battery is configured to supply electric energy.

The above description is merely an overview of the technical solutions of the present disclosure. To facilitate a clear understanding of technical means of the present disclosure and the implementations of the technical solutions in accordance with the contents of the specification, and to clarify and explain the above and other objects, features, and advantages of the present disclosure, specific implementations of the present disclosure will be described below.

### BRIEF DESCRIPTION OF THE DRAWINGS

In the drawings, unless otherwise specified, same or similar parts or elements are denoted by same reference numerals throughout a plurality of drawings. These drawings are not necessarily drawn to scale. It should be understood that these drawings depict only some implementations disclosed in the present disclosure, and should not be considered as limiting the scope of the present disclosure.
FIG. 1 is a schematic view of an example battery cell in the related art.
FIG. 2 is a schematic view of an example battery module in the related art.
FIG. 3 is a schematic structural view of a vehicle according to some embodiments of the present disclosure.
FIG. 4 is a schematic view of an exploded structure of a battery according to some embodiments of the present disclosure.
FIG. 5 is a front view of a battery cell provided according to some embodiments of the present disclosure.
FIG. 6 is a schematic cross-sectional view of the battery cell shown in FIG. 5 in an A-A direction.
FIG. 7 is a schematic structural view of a current collection member in a battery cell provided according to some embodiments of the present disclosure.
FIG. 8 is an exploded view of an electrode assembly and a current collection member in a battery cell provided according to some embodiments of the present disclosure.
FIG. 9 is a schematic cross-sectional view of the current collection member shown in FIG. 7.
FIG. 10 is a top view of the current collection member shown in FIG. 7.
FIG. 11 is a schematic view of a battery module in a battery cell provided according to some embodiments of the present disclosure.
FIG. 12 is a partially schematic view of FIG. 6.
FIG. 13 is a schematic cross-sectional view of an insulation member in a battery cell according to some embodiments of the present disclosure.
FIG. 14 is a schematic structural view of a housing in a battery cell according to some embodiments of the present disclosure.
FIG. 15 is a schematic cross-sectional view of the housing shown in FIG. 14.

The reference signs are explained as follows:
vehicle 1000;
battery 100; controller 200; motor 300;
case body 10; first part 11; second part 12;
battery cell 20;
end cover 21; annular protrusion 211; housing 22; end wall 221; reinforcement rib 222; electrode assembly 23; first tab 231; second tab 232; electrode terminal 233; liquid injection hole 2331; sealing nail 2332; center hole 234; current collection member 24; first current collector 241; tab connection portion 2411; connection portion 2412; conductive portion 2413; second through hole 2414; second current collector 242; tab connection portion 2421; output electrode connection portion 2422; insulation plate 243; first notch 2431; second notch 2432; first through hole 2433; insulation member 25; central through hole 251; weight reduction portion 252; abutting surface 253; step portion 254;
battery module 30; busbar 31.

### DETAILED DESCRIPTION

Embodiments of technical solutions of the present disclosure will be described in detail below with reference to the accompanying drawings. The following embodiments are only used to explain the technical solutions of the present disclosure more clearly, and therefore should be construed as examples only, rather than limitations of the protection scope of the present disclosure.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "including", "having", and any variations thereof in the specification, claims, and accompanying drawings of the present disclosure are intended to cover non-exclusive inclusions.

In the description of the embodiments of the present disclosure, the technical terms "first", "second", etc. are used to distinguish different objects, and cannot be understood as indicating or implying relative importance or implicitly specifying a number, a particular order, or a primary or secondary relationship of the indicated technical features. In the description of the embodiments of the present disclosure, "plurality" means at least two, unless otherwise specifically defined.

In the present disclosure, reference to "embodiment" means that a particular feature, structure, or characteristic described in conjunction with the embodiment may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

In the description of the embodiments of the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In the description of the embodiments of the present disclosure, the term "plurality" refers to more than two (including two). Similarly, "plurality of groups" refers to more than two groups (including two groups), and "plurality of pieces" refers to more than two pieces (including two pieces).

In the description of the embodiments of the present disclosure, the orientation or the position indicated by technical terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation on the embodiments of the present disclosure.

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

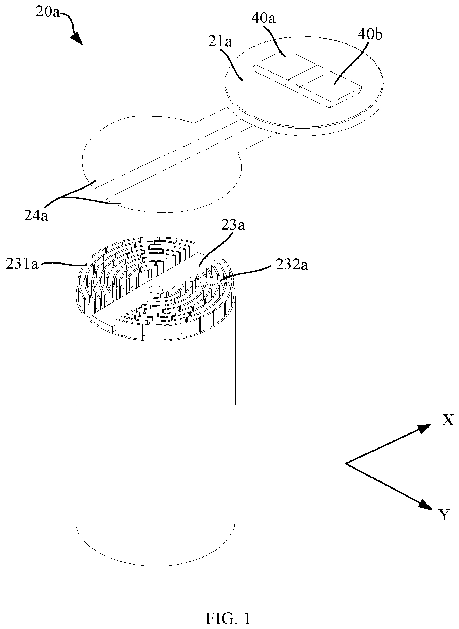

FIG. 1 is a schematic view of an example battery cell 20a in the related art. Referring to FIG. 1, at present, the battery cell 20a generally has a positive electrode output electrode 40a and a negative electrode output electrode 40b that have opposite polarities. The positive electrode output electrode 40a and the negative electrode output electrode 40b are electrically connected to a positive electrode tab 231a and a negative electrode tab 232a of the battery cell 20a, respectively, to output electrical energy of the battery cell 20a. In order to better implement the electrical connection between the output electrode 40a and output electrode 40b and the tab 231a and tab 232a, two current collection members 24a are generally provided in the battery cell 20a. The output electrode 40a and output electrode 40b and the tab 231a and tab 232a are connected to each other through the current collection members 24a. In an example of the related art, the two output electrodes 40a and 40b are located at a same end of the battery cell 20a. In this way, the two current collection members 24a are located at a same side of the electrode assembly 23a of the battery cell 20a. Moreover, the two current collection members 24a are located at a same plane, to facilitate a reduction in a space inside the battery cell 20a occupied by the current collection member 24a. However, the inventor finds that for the battery cell 20a in the related art, as the two current collection members 24a are located on the same side of the electrode assembly 23a and share the same plane, when the battery cell 20a vibrates or is impacted, the two current collection members 24a are easily overlapped with each other due to the vibration of the battery cell 20a, resulting in a short circuit inside the battery cell 20a, even fire and explosion. Therefore, the battery cell 20a is poor in safety performance.

In addition, it should be noted that the battery cell 20a also has the following problems.

In order to enable the current collection member 24a to be welded and connected to the tabs 231a and 232a and the output electrodes 40a and 40b simultaneously, the current collection member 24a has a first end and a second end in a length direction X. One current collection member 24a has a first end configured to be welded and connected to the positive electrode tab 231a and a second end configured to be welded and connected to the positive electrode output electrode 40a. Another current collection member 24a has a first end configured to be welded and connected to the negative electrode tab 232a and a second end configured to be welded and connected to the negative electrode output electrode 40b. On this basis, in order to reduce the space inside the battery cell 20a occupied by the current collection member 24a, in the related art, the current collection member 24a is a bendable and foldable structure. In addition, the second end can be bent and laminated to the first end. In this way, the bending of the current collection member 24a occupies a space in a height direction of the battery cell 20a.

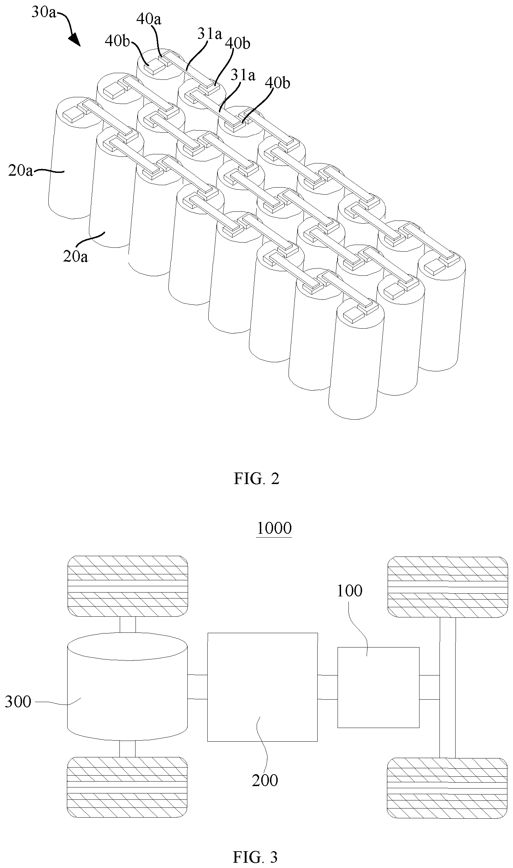

In a battery cell 20a of the related art, as illustrated in FIG. 1, the two output electrodes 40a and 40b are a positive electrode pole and a negative electrode pole, respectively. Moreover, the positive electrode pole and the negative electrode pole are arranged in a width direction Y of the current collection member 24a. FIG. 2 is a schematic view of an example battery module 30a in the related art. As illustrated in FIG. 2, a battery may have a plurality of battery cells 20a shown in FIG. 1. The plurality of battery cells 20a is connected to each other to form the battery module 30a. As an example, three battery cells 20a are connected to each other. A positive electrode pole of one of the three battery cells 20a is connected to a negative electrode pole of another one of the three battery cells 20a through a busbar 31a. A positive electrode pole of the other one of the three battery cells 20a is connected to a negative electrode pole of a remaining one of the three battery cells 20a through the busbar 31a. It should be noted that, the positive electrode pole and the negative electrode pole of each battery cell 20a are each not located at a central position of an end cover 21a of the battery cell 20a. As a result, during connecting two battery cells 20a, in order to avoid mutual overlap and contact between the connecting busbars 31a, before the busbar 31a is welded to poles of the two battery cells 20a that have different polarities, the battery cell 20a usually needs to be rotated to adjust a position of the pole on the battery cell 20. In this way, the poles of the two battery cells 20a that have different polarities are substantially opposite to each other. Therefore, assembly efficiency is caused to be low, resulting in low production efficiency of the battery.

In view of the above problems, the embodiments of the present disclosure provide a battery cell. The current collection member is designed to include an insulation plate, a first current collector, and a second current collector. In this way, the first current collector and the second current collector are embedded in a first notch and a second notch on the insulation plate, respectively. Moreover, the first notch and the second notch are independent of each other. As a result, the first current collector and the second current collector are realized to be insulated from each other through the insulation plate integrated with the first current collector and the second current collector. Therefore, insulation reliability can be improved. In addition, operation reliability and safety of the battery cell are improved.

The battery cell disclosed in the embodiments of the present disclosure may be, but is not limited to, an electric device such as a vehicle, a ship, or an aircraft. A power supply system including the battery cell, the battery, etc. disclosed in the present disclosure may be used to form the power supply system of the electric device. In this way, it is beneficial to improving the safety performance of the battery.

The embodiments of the present disclosure provide an electric device using the battery as a power supply. The electric devices may be, but are not limited to, a cell phone, a tablet, a laptop computer, an electric toy, an electric tool, an electric scooter, an electric vehicle, a ship, a spacecraft, and the like. The electric toy may include a fixed electric toy or a mobile electric toy, e.g., a game console, an electric car toy, an electric ship toy, and an electric airplane toy. The spacecraft may include an airplane, a rocket, a space shuttle, a spaceship, or the like.

In the following embodiments, as an example, an electric device according to an embodiment of the present disclosure is described as a vehicle 1000 for convenience of description.

FIG. 3 is a schematic structural view of a vehicle 1000 according to some embodiments of the present disclosure. Referring to FIG. 3, the vehicle 1000 may be a fuel vehicle, a gas vehicle, or a new energy vehicle. The new energy vehicle may be a battery electric vehicle, a hybrid electric vehicle, an extended range vehicle, or the like. A battery 100 is disposed in the vehicle 1000, and the battery 100 may be disposed at a bottom or a head or a tail of the vehicle 1000. The battery 100 may be configured to supply power to the vehicle 1000. For example, the battery 100 may be used as an operational power source of the vehicle 1000. The vehicle 1000 may further include a controller 200 and a motor 300. The controller 200 is configured to control the battery 100 to supply power to the motor 300, e.g., for operational power needs in starting, navigation, and traveling of the vehicle 1000.

In some embodiments of the present disclosure, the battery 100 may not only serve as an operational power source of the vehicle 1000, but also serve as a drive power source of the vehicle 1000 in lieu of, or in part in lieu of a fuel oil or a natural gas to provide drive power for the vehicle 1000.

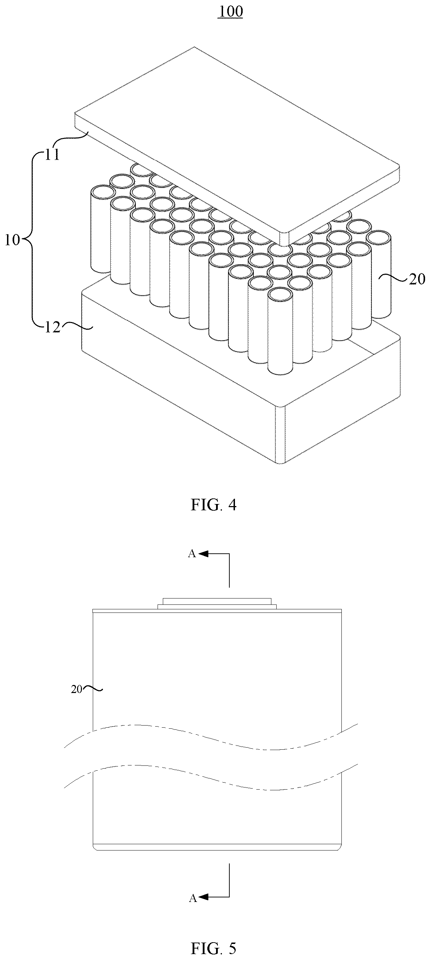

FIG. 4 is a schematic view of an exploded structure of a battery 100 according to some embodiments of the present disclosure. Referring to FIG. 4, the battery 100 includes a case body 10 and a battery cell 20. The battery cell 20 is accommodated in the case body 10. The case body 10 provides an accommodation space for the battery cell 20, and may be in various structures. In some embodiments, the case body 10 may include a first part 11 and a second part 12. The first part 11 and the second part 12 fit with each other. The first part 11 and the second part 12 together define the accommodation space for accommodating the battery cell 20. The second part 12 may be in a hollow structure having an opening at one end thereof while the first part 11 may be in a plate-like structure. The first part 11 covers the second part 12 at the opening side to enable the first part 11 and the second part 12 to define the accommodation space. Also, each of the first part 11 and the second part 12 may be in the hollow structure having an opening at one end thereof, and the first part 11 at the opening side covers over the second part 12 at the opening side. Of course, the case body 10 formed by the first part 11 and the second part 12 may be of various shapes, for example, a cylinder, a cuboid, and so on.

In the battery 100, a plurality of battery cells 20 may be provided. The plurality of battery cells 20 may be connected in series or in parallel or in series and parallel. The expression "in series and parallel" means that the plurality of battery cells 20 is connected both in series and in parallel. The plurality of battery cells 20 may be directly connected in series or in parallel or in series and parallel, and then accommodated in the case body 10 as a whole. Of course, for the battery 100, the plurality of battery cells 20 may be connected in series or in parallel or in series and parallel to form a battery module, and then a plurality of battery modules may be connected in series or in parallel or in series and parallel and accommodated in the case body 10 as a whole. The battery 100 may further have other structures. For example, the battery 100 may further include a busbar configured to implement an electrical connection between the plurality of battery cells 20.

Each battery cell 20 may be a secondary battery or a primary battery. The battery cell 20 may be a lithium-sulfur battery, a sodium-ion battery, or a magnesium-ion battery. The present disclosure is not limited to any of these examples. The battery cell 20 may be in a shape of a cylinder, a flat body, a cuboid, or the like.

A specific structure of the battery cell 20 is described in detail below with reference to the accompanying drawings.

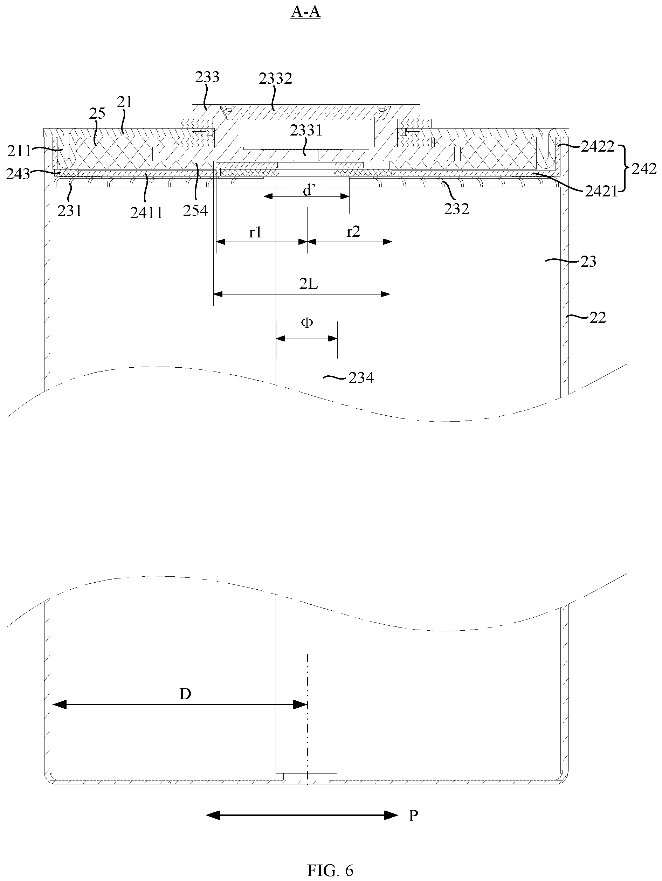

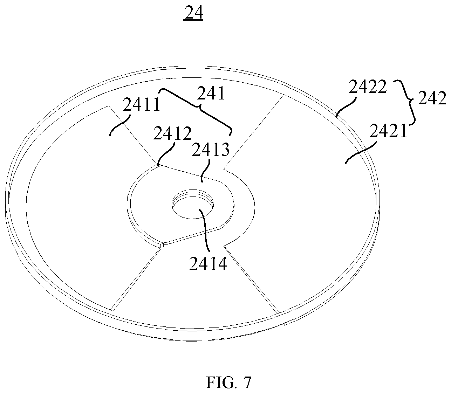

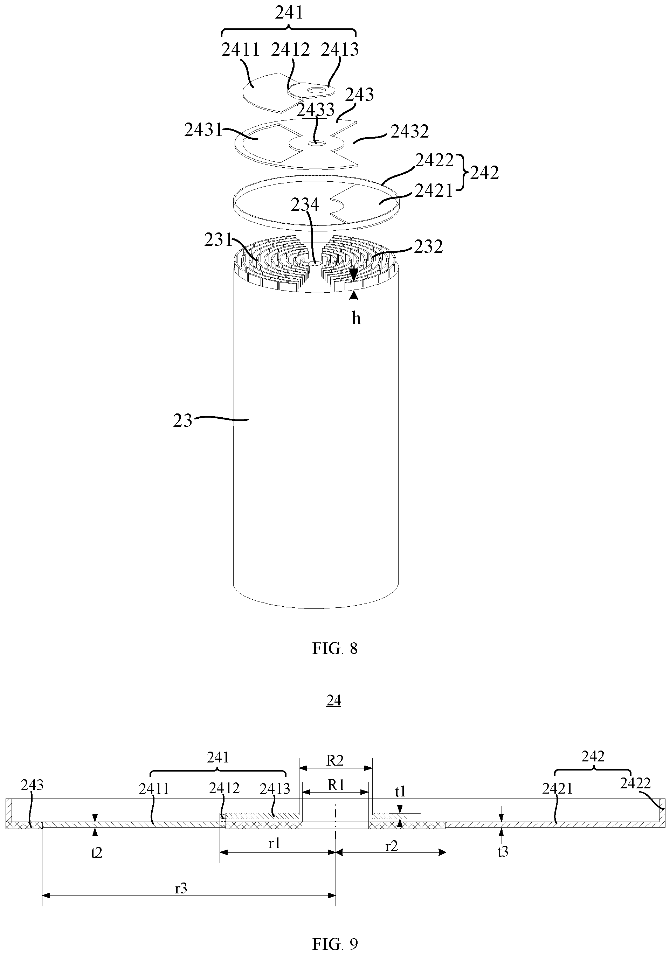

FIG. 5 is a front view of a battery cell 20 provided according to some embodiments of the present disclosure. FIG. 6 is a schematic cross-sectional view of the battery cell 20 shown in FIG. 5 in an A-A direction. FIG. 7 is a schematic structural view of a current collection member 24 in a battery cell 20 provided according to some embodiments of the present disclosure. FIG. 8 is an exploded view of an electrode assembly 23 and a current collection member 24 in a battery cell 20 provided according to some embodiments of the present disclosure. FIG. 9 is a schematic cross-sectional view of the current collection member 24 shown in FIG. 7.

Referring to FIG. 5 to FIG. 9, the battery cell 20 is the smallest unit that makes up the battery 100. The battery cell 20 includes an electrode assembly 23, a first output electrode, a second output electrode, and a current collection member 24. The electrode assembly 23 is a member generating an electrochemical reaction in the battery cell 100. The electrode assembly 23 has a first tab 231 and a second tab 232 that have opposite polarities. The first output electrode and the second output electrode have opposite polarities for outputting electric energy of the battery cell 20.

The current collection member 24 includes an insulation plate 243, and a first current collector 241, a second current collector 242. The insulation plate 243 has a first notch 2431 and a second notch 2432 that are spaced apart from each other in a circumferential direction of the insulation plate 243. The first current collector 241 is at least partially accommodated in the first notch 2431. The first current collector 241 electrically connects the first tab 231 with the first output electrode. The second current collector 242 is at least partially accommodated in the second notch 2432. The second current collector 242 electrically connects the second tab 232 with the second output electrode. Moreover, the insulation plate 243 insulates the first current collector 241 from the second current collector 242.

The polarity of the first output electrode is the same as the polarity of the first tab 231. The polarity of the second output electrode is the same as the polarity of the second tab 232. For example, the first output electrode may be a positive electrode output electrode, and the first tab 231 is a positive electrode tab. Correspondingly, the second output electrode is a negative electrode output electrode, and the second tab 232 is a negative electrode tab. Alternatively, the first output electrode may be a negative electrode output electrode, and the second output electrode is a positive electrode output electrode. Each of the first output electrode and the second output electrode may be an electrode terminal 233. The electrode terminal 233 may be designed as a pole, and the pole may be of a cylindrical structure, a square post structure, or a cylinder structure in other shapes.

In the example, since the first current collector 241 and the second current collector 242 are each disposed at the insulation plate 243, the first current collector 241 and the second current collector 242 are located at the same side of the electrode assembly 23 according to relative positions of the insulation plate 243 and the electrode assembly 23. Therefore, the first tab 231 and the second tab 232 are formed at the same end of the electrode assembly 23. The first current collector 241 and the second current collector 242 are conductive portions of the current collection member 24. The first current collector 241 and the second current collector 242 are made of conductive metal, such as aluminum, iron, copper, and stainless steel.

The first notch 2431 and the second notch 2432 penetrate the insulation plate 243. Since the first notch 2431 and the second notch 2432 are not in communication with each other, the insulation plate 243 separates a part of the first current collector 241 embedded in the first notch 2431 and a part of the second current collector 242 embedded in the second notch 2432 from the space. The insulation plate 243 may be made of plastic, rubber (such as silica gel), and the like.

The insulation plate 243, the first current collector 241, and the second current collector 242 are integrated into an integrated structure, such as being integrally formed by injection molding or the like, or the first current collector 241 and the second current collector 242 are only embedded at the insulation plate 243.

In the embodiments of the present disclosure, the two current collectors in the current collection member 24 are at least partially embedded in the first notch 2431 and the second notch 2432 of the insulation plate 243, respectively. Because the first notch 2431 and the second notch 2432 are not in communication with each other, the insulation plate 243 can play an insulation role between the two current collectors. Moreover, the first current collector 241 and the second current collector 242 are insulated from each other through the insulation plate 243 integrated with the first current collector 241 and the second current collector 242. In this way, reliability of insulation can be improved. Moreover, the influence of assembly errors or vibration to insulation performance is reduced. Therefore, reliability and safety of operation of the battery cell 20 are improved.

According to some embodiments of the present disclosure, each of the first current collector 241 and the second current collector 242 includes a tab connection portion and an output electrode connection portion. The tab connection portion 2411 of the first current collector 241 is embedded in the first notch 2431 and is electrically connected to the first tab 231. The output electrode connection portion of the first current collector 241 is electrically connected to the first output electrode. The tab connection portion 2421 of the second current collector 242 is embedded in the second notch 2432 and electrically connected to the second tab 232. The output electrode connection portion 2422 of the second current collector 242 is electrically connected to the second output electrode.

The tab connection portion 2411 of the first current collector 241 may be connected to the first tab 231 by welding, and the output electrode connection portion of the first current collector 241 is connected to the tab connection portion 2411 and may be connected to the first output electrode by welding. In this way, the electrode assembly 23, the first tab 231, the tab connection portion 2411 of the first current collector 241, the output electrode connection portion of the first current collector 241, and the first output electrode are sequentially conducted to form a conductive path. A current of the electrode assembly 23 may be transmitted to the first output electrode along the conductive path. Similarly, the tab connection portion 2421 of the second current collector 242 may be connected to the second tab 232 by welding. Moreover, the output electrode connection portion 2422 of the second current collector 242 is connected to the tab connection portion 2421 and may be connected to the second output electrode by welding. In this way, the electrode assembly 23, the second tab 232, the tab connection portion 2421 of the second current collector 242, the output electrode connection portion 2422 of the second current collector 242, and the second output electrode are sequentially conducted to form another conductive path. The current of the electrode assembly 23 may be transmitted to the second output electrode along the conductive path.

In some embodiments, the two current collectors may both be in a flat plate shape. The insulation plate 243 may also be of a flat plate structure. The first current collector 241, the second current collector 242, and the insulation plate 243 may be collectively regarded as forming a flat plate structure.

In this way, the first tab 231 and the first output electrode can be allowed to be connected to different regions on the first current collector 241, respectively. Therefore, deformation and damage of the first current collector 241 caused by repeated welding for many times can be prevented. Moreover, welding reliability can be improved. Similarly, the second tab 232 and the second output electrode can be allowed to be connected to different regions on the second current collector 242, respectively. Therefore, the deformation and damage of the second current collector 242 caused by repeated welding for many times can be prevented. Moreover, the welding reliability can be improved.

Moreover, on the premise that the current collection member 24 can satisfy a case of being connected to the tab and the output electrode simultaneously, the current collection member 24 in the embodiment does not need to be bent. Further, the bending of the current collection member 24 can be prevented from occupying the space of the battery cell 20 in the height direction of the battery cell 20.

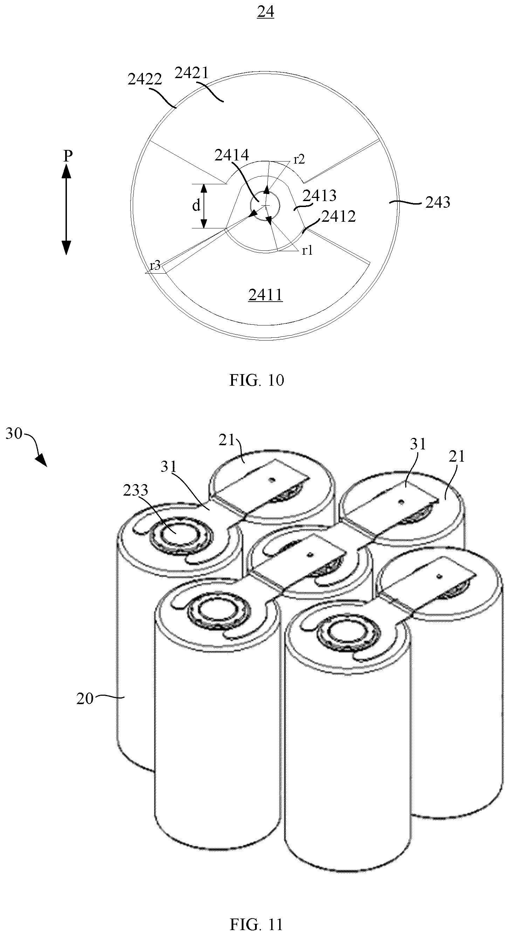

FIG. 10 is a top view of the current collection member 24 shown in FIG. 7. According to some embodiments of the present disclosure, with reference to FIG. 8 and FIG. 10, a minimum spacing d between the tab connection portion 2411 of the first current collector 241 and the tab connection portion 2421 of the second current collector 242 is greater than 0 mm.

In an example, the first opening and the second opening may be symmetrically defined at two sides of the central position of the insulation plate 243 in a predetermined direction P. In this way, the tab connection portion 2411 of the first current collector 241 and the tab connection portion 2421 of the second current collector 242 may also be symmetrically disposed on the two sides of the central position of the insulation plate 243 in the predetermined direction P. At this time, d may be understood as a minimum spacing between the tab connection portion 2411 of the first current collector 241 and the tab connection portion 2421 of the second current collector 242 in the predetermined direction P.

In this way, it is beneficial to ensuring that a predetermined distance occurs between the tab connection portion 2411 of the first current collector 241 and the tab connection portion 2421 of the second current collector 242. Therefore, the insulation plate 243 can play an insulation role between the tab connection portions of the two current collectors.

According to some embodiments of the present disclosure, referring to FIG. 8, each of the first notch 2431 and the second notch 2432 may be in a fan shape. The tab connection portion 2411 of the first current collector 241 is matched with the first notch 2431. The tab connection portion 2421 of the second current collector 242 is matched with the second notch 2432.

In an example shown in FIG. 8, the electrode assembly 23 may have a plurality of first tabs 231 and a plurality of second tabs 232. The plurality of first tabs 231 and the plurality of second tabs 232 may be symmetrical relative to the central position of the insulation plate 243. Moreover, the plurality of first tabs 231 and the plurality of second tabs 232 are also arranged in a fan shape. In this way, the tab connection portion 2411 of the first current collector 241 has a similar shape to an arrangement shape of the plurality of first tabs 231, i.e., the tab connection portion 2411 of the first current collector 241 is in a fan shape, enabling the tab connection portion 2411 of the first current collector 241 to cover most of the first tabs 231. Therefore, it can be ensured that all the first tabs 231 are each connected to the tab connection portion 2411 of the first current collector 241. Similarly, the tab connection portion 2421 of the second current collector 242 has a similar shape to an arrangement shape of the plurality of second tabs 232, i.e., the tab connection portion 2421 of the second current collector 242 is in a fan shape, enabling the tab connection portion 2421 of the second current collector 242 to cover at least a majority of the second tabs 232, thereby ensuring that all the second tabs 232 can be each connected to the tab connection portion 2421 of the second current collector 242.

Here, as illustrated in FIG. 8, the "fan shape" presented by the first notch 2431 and the second notch 2432 is formed by enclosing two arc edges and two radial edges. The two radial edges extend in a radial direction of a circular insulation plate 243, and the two radial edges pass through two ends of any one of arc edges.

In such a design, not only can the mounting positions of the tab connection portions of the two current collectors be easily obtained to facilitate mounting of the tab connection portions in the corresponding notches, but the tab connection portions of the two current collectors are also difficult to be disengaged from the first notch 2431 and the second notch 2432, respectively. In this way, the tab connection portions of the two current collectors are difficult to get close to each other. Therefore, the risk of the short circuit inside the battery cell 20 caused by a lap joint of the two current collectors is lowered. Moreover, the safety of the battery cells 20 is improved.

According to some embodiments of the present disclosure, when the first notch 2431 and the second notch 2432 are both in a fan shape, and when the tab connection portions of the two current collectors are correspondingly in a fan shape, the tab connection portion 2411 of the first current collector 241 and the tab connection portion 2421 of the second current collector 242 may be configured to be homocentric. In other words, a circle center of the fan-shaped tab connection portion 2411 of the first current collector 241 and a circle center of the fan-shaped tab connection portion 2421 of the second current collector 242 are each aligned with the center of the electrode assembly 23.

Correspondingly, the first notch 2431 and the second notch 2432 are also homocentric, i.e., a circle center of the first notch 2431 and a circle center of the second notch 2432 are each aligned with the center of the electrode assembly 23. Moreover, the first notch 2431 and the second notch 2432 may be symmetrically disposed relative to the center of the electrode assembly 23.

According to some embodiments of the present disclosure, the tab connection portion 2411 of the first current collector 241 includes a first arc-shaped edge and a second arc-shaped edge that are arranged in a radial direction of the tab connection portion 2411 of the first current collector 241. The first arc-shaped edge is closer to a central axis of the electrode assembly 23 than the second arc-shaped edge. A curvature radius of the first arc-shaped edge is r1. r1 and d satisfy: d≥2/3*r1, where r1 may be designed to be range from 9 mm to 19 mm.

In such a design, it is ensured that the tab connection portions of the two current collectors are spaced apart from each other by a predetermined distance. In this way, each of the tab connection portions of the two current collectors is far away from the tab having a polarity opposite to the tab connection portion. Therefore, it helps to avoid that the tab connection portion 2411 of the first current collector 241 is in lap joint with the second tab 232 and that the tab connection portion 2421 of the second current collector 242 is in lap joint with the first tab 231.

According to some embodiments of the present disclosure, the tab connection portion 2421 of the second current collector 242 includes a third arc-shaped edge and a fourth arc-shaped edge that are arranged in a radial direction of the tab connection portion 2421 of the second current collector 242. The third arc-shaped edge is closer to a central axis of the electrode assembly 23 than the fourth arc-shaped edge. A curvature radius of the third arc-shaped edge is r2. r2 and d satisfy: d≥2/3*r2.

Here, r2 ranges from 11 mm to 21 mm, and d may be designed to be greater than or equal to 4 mm and smaller than or equal to 9 mm.

In such a design, it is ensured that the tab connection portions of the two current collectors are spaced apart from each other by a predetermined distance. In this way, each of the tab connection portions of the two current collectors is far away from the tab having the polarity opposite to the tab connection portion. Therefore, it helps to avoid that the tab connection portion 2411 of the first current collector 241 is in lap joint with the second tab 232 and that the tab connection portion 2421 of the second current collector 242 is in lap joint with the first tab 231.

According to some embodiments of the present disclosure, the battery cell 20 may further include a housing 22 and an end cover 21. The housing 22 has an opening. The electrode assembly 23 is accommodated in the housing 22. The end cover 21 is configured to cover the opening. The first output electrode is mounted at the end cover 21 and insulated from the end cover 21. The second output electrode is the end cover 21.

The housing 22 is of a hollow structure formed with an opening. The end cover 21 covers the opening of the housing 22 to isolate an internal environment of the battery cell 20 from an external environment. The internal environment of the battery cell 20 may be used for accommodating the electrode assembly 23, and an electrolyte and the current collection member 24. The housing 22 is not limited to be in a cylindrical shape. The housing 22 may also be in a flat shape, a cuboid shape, or other shapes. Without limitation, a shape of the end cover 21 may match the shape of the housing 22 to be fitted with the housing 22. In the embodiment, a shape of the insulation plate 243 may match the shape of the housing 22. When the housing 22 is in a cylindrical shape, the insulation plate 243 is correspondingly in a circular shape.

The end cover 21 may be made of a metal material and is used as a second output electrode, which can omit an electrode terminal 233. The end cover 21 and the housing 22 may also be connected to each other by welding. In this way, the housing 22 can also allow for overcurrent. In the example, the first output electrode is an electrode terminal 233, which may be protruded from and mounted at the end cover 21, so as to facilitate realizing an electrical connection between different battery cells 20 through the busbar 31.

The end cover 21 has an opening hole, and the electrode terminal 233 is mounted in the opening hole. The battery cell 20 may further include a sealing member. The sealing member is disposed around the electrode terminal 233 and configured to seal a gap between the electrode terminal 233 and a hole wall of the opening hole. Moreover, the sealing member plays an insulation role between the electrode terminal 233 and the end cover 21.

Here, the first output electrode may further have a liquid injection hole 2331. A center line of the liquid injection hole 2331 is collinear with a center line of a center hole 234 of the electrode assembly 23. In this way, the electrolyte can be injected into the battery cell 20 through the liquid injection hole 2331. In the embodiment, the first output electrode may further be mounted with a sealing nail 2332. The sealing nail 2332 is in a cover plate shape and is located above the liquid injection hole 2331 to block the liquid injection hole 2331. Therefore, the battery cell 20 has sealing performance.

The first output electrode (i.e., the electrode terminal 233) of the battery cell 20 in the embodiment is mounted at the end cover 21. The second output electrode is an end cover 21 surrounding a periphery of the first output electrode. FIG. 11 is a schematic view of a battery module 30 in a battery cell 20 according to some embodiments of the present disclosure. With this arrangement, referring to FIG. 11, in an implementation where the battery 100 has a battery module 30 composed of a plurality of battery cells 20, output electrodes having opposite polarities on the two battery cells 20 may be connected to each other through the busbar 31 to form the battery module 30. As an example, three battery cells 20 are connected to each other for illustration. An exemplary connection step may be as follows. Two ends of one busbar 31 are welded to the end cover 21 of the first battery cell 20 and the electrode terminal 233 of the second battery cell 20, respectively. Then, two ends of another busbar 31 are welded to the end cover 21 of the second battery cell 20 and the electrode terminal 233 of the third battery cell 20, respectively. The busbar 31 may be welded to any position of the end cover 21 of the battery cell 20. The electrode terminal 233 is located on the end cover 21, and the end cover 21 surrounds the periphery of the electrode terminal 233. Therefore, when the battery cell 20 is at any position, both ends of the busbar 31 can be easily connected to the electrode terminal 233 of one battery cell 20 and the end cover 21 of the other battery cell 20, respectively. It can be seen therefrom that when the plurality of battery cells 20 in the embodiment are connected to each other to assemble the battery module 30, the battery cell 20 does not need to be rotated to frequently adjust the position of the output electrode. In this way, the output electrodes with opposite polarities in the plurality of battery cells 20 can be conveniently connected to each other. Further, an enhancement in the assembly efficiency of the battery module 30 is advantageous. Furthermore, the production efficiency of the battery 100 is high.

For example, a surface of the end cover 21 may also be formed with a nickel-plated layer. By designing the surface of the end cover 21 to have the nickel-plated layer, in an implementation where the output electrode connection portion 2422 of the second current collector 242 in the current collection member 24 is welded to the end cover 21, the nickel-plated layer helps to improve a welding effect, so as to improve welding stability of the second current collector 242 and the end cover 21. For another example, in the implementation where the battery 100 has the battery module 30 composed of the plurality of battery cells 20, the busbar 31 may be welded and connected to the end cover 21 of the battery cell 20. The nickel-plated layer on the end cover 21 herein can also improve a welding effect of the busbar 31 and the end cover 21.

A mounting position of the first output electrode on the end cover 21 is not limited. For example, the first output electrode may deviate from a center of the end cover 21. According to some embodiments of the present disclosure, as illustrated in FIG. 6, the first output electrode may also be mounted in a central region of the end cover 21.

In the embodiment, the first output electrode is disposed in the central region of the end cover 21. In this way, the busbar 31 can be more easily connected to a first output electrode of one battery cell 100 and a second output electrode of an adjacent battery cell 100. Therefore, assembly is convenient. Moreover, an improvement in an overcurrent capability of the busbar 31 is facilitated.

According to some embodiments of the present disclosure, an orthographic projection of the first output electrode on the end cover 21 and an orthographic projection of the tab connection portion 2421 of the second current collector 242 on the end cover 21 have an overlapping region. The output electrode connection portion of the first current collector 241 is protruded relative to the tab connection portion 2411 of the first current collector 241.

Here, the output electrode connection portion of the first current collector 241 extends in a direction facing away from the electrode assembly 23 relative to the tab connection portion 2411. In this way, the output electrode connection portion of the first current collector 241 can be conveniently connected to the first output electrode.

Considering a case where the orthographic projection of the first output electrode on the end cover 21 and the orthographic projection of the tab connection portion 2421 of the second current collector 242 on the end cover 21 have the overlapping region, the output electrode connection portion of the first current collector 241 is protruded relative to the tab connection portion 2411 of the first current collector 241. In this way, a distance between the tab connection portion 2421 of the second current collector 242 and the first output electrode in an axial direction of the electrode assembly 23 is increased. Moreover, the output electrode connection portion of the first current collector 241 can separate the tab connection portion 2421 of the second current collector 242 from the first output electrode. Therefore, the short circuit caused by the second current collector 242 being in contact with the first output electrode is avoided.

According to some embodiments of the present disclosure, with continued reference to FIG. 7, FIG. 8, and FIG. 9, the output electrode connection portion of the first current collector 241 includes a connection portion 2412 and a conductive portion 2413. The connection portion 2412 has an end connected to a peripheral side surface of the tab connection portion 2411 of the first current collector 241 and another end connected to the conductive portion 2413. Moreover, the conductive portion 2413 is located between the insulation plate 243 and the first output electrode.

The connection portion 2412 may be a plate body extending in a thickness direction of the insulation plate 243, so as to achieve a level difference between the tab connection portion 2411 of the first current collector 241 and the conductive portion 2413. The conductive portion 2413 may also be in a plate shape. Moreover, the plate-shaped conductive portion 2413 is disposed opposite to the insulation plate 243.

In some embodiments, the tab connection portion 2411, the connection portion 2412, and the conductive portion 2413 of the first current collector 241 may be an integrated member made by an integrated molding process. In this way, firstly, an assembling processes between the tab connection portion 2411 and the connection portion 2412 and between the connection portion 2412 and the conductive portion 2413 can be omitted. Secondly, on the premise that the cost is not increased, structural strength of the first current collector 241 can be effectively improved. For example, the first current collector 241 may be formed by bending or stamping.

In this way, under the obstruction of the conductive portion 2413, a distance occurs between the first output electrode and the tab connection portion 2421 of the second current collector 242 in the height direction of the battery cell 20. Therefore, a short circuit caused by the contact between the first output electrode and the tab connection portion 2421 of the second current collector 242 is prevented.

According to some embodiments of the present disclosure, a central region of the insulation plate 243 protrudes towards the conductive portion 2413 than a peripheral region of the insulation plate 243 and is supported at the conductive portion 2413.

With this arrangement, on the one hand, the conductive portion 2413 can play a role in supporting the insulation plate 243. On the other hand, in an implementation where the first output electrode is disposed in the central region of the end cover 21, the conductive portion 2413 can be further raised by making the central region of the insulation plate 243 protrude. Further, the distance between the first output electrode and the tab connection portion 2421 of the second current collector 242 in the height direction of the battery cell 20 can be further increased. Therefore, the insulation reliability is improved.

According to some embodiments of the present disclosure, with continued reference to FIGS. 6 and 8, the central region of the insulation plate 243 may have a first through hole 2433. The conductive portion 2413 may have a second through hole 2414. The electrode assembly 23 has a center hole 234 defined in the center of the electrode assembly 23. An orthographic projection of the first through hole 2433 on the end cover 21 in an axial direction of the electrode assembly 23 at least partially overlaps with an orthographic projection of the second through hole 2414 on the end cover 21 in the axial direction of the electrode assembly 23; and/or the orthographic projection of the first through hole 2433 on the end cover 21 in the axial direction of the electrode assembly 23 at least partially overlaps with an orthographic projection of the center hole 234 on the end cover 21 in the axial direction of the electrode assembly 23.

As an example, the electrode assembly 23 is a winding-type battery cell, and the center hole 234 is a hole defined by a winding central position of the electrode assembly 23. For example, referring to FIG. 6 and FIG. 8, the first tab 231 and the second tab 232 of the electrode assembly 23 may be formed at both sides of the center hole 234 in the predetermined direction P, respectively.

The orthographic projection of the first through hole 2433 on the end cover 21 may partially overlap with or completely overlap with the orthographic projection of the second through hole 2414 on the end cover 21. In other embodiments, the orthographic projection of the first through hole 2433 on the end cover 21 may completely fall into the orthographic projection of the second through hole 2414 on the end cover 21, or the orthographic projection of the second through hole 2414 on the end cover 21 may also completely fall into the orthographic projection of the first through hole 2433 on the end cover 21. The orthographic projection of the first through hole 2433 on the end cover 21 and the orthographic projection of the center hole 234 on the end cover 21 may also partially overlap or completely overlap with each other.

With the arrangement, the first through hole 2433 and the center hole 234 are at least partially aligned with the second through hole 2414. In this way, the first through hole 2433, the second through hole 2414, and the center hole 234 are each in communication with each other. Thus, the electrolyte in the housing 22 easily flows through the second through hole 2414 and the first through hole 2433 into the center hole 234. Therefore, the center of the electrode assembly 23 can also be fully infiltrated by the electrolyte.

According to some embodiments of the present disclosure, with continued reference to FIG. 6 and FIG. 8, the electrode assembly 23 further includes a body portion. The first tab and the second tab are connected to the body portion. The first tab and the second tab are bent relative to the body portion and are in a flattened state. Moreover, an orthographic projection of each of the first tab and the second tab in the flattened state on the end cover 21 does not overlap with the orthographic projection of the first through hole 2433 on the end cover 21.

As an example, a center line of the first through hole 2433 is collinear with a center line of the center hole 234. For the first through hole 2433 in a circular shape, an aperture R1 of the first through hole 2433 may be designed to be smaller than an aperture Φ of the center hole 234. The aperture R1 of the first through hole 2433 refers to a diameter of the first through hole 2433. The aperture Φ of the center hole 234 refers to a diameter of the center hole 234. The aperture Φ of the center hole 234 may be designed to be range from 3 mm to 8 mm. The aperture R1 of the first through hole 2433 may be designed to be range from 3 mm to 8 mm.

In such a design, the orthographic projection of a tab on the electrode assembly 23 in the flattened state on the insulation plate 243 does not fall into the first through hole 2433. In this way, each of the first tab 231 and the second tab 232 of the electrode assembly 23 cannot extend into the first through hole 2433, so as to avoid that the second tab 232 is in contact with the periphery of the second through hole 2414 on the conductive portion 2413 to cause the short circuit inside the battery cell 20. In other words, the insulation plate 243 can completely insulate and block the conductive portion 2413 from the first tab 231 and the second tab 232 of the electrode assembly 23, so as to avoid that the second tab 232 is in lap joint with the conductive portion 2413 of the first current collector 241 to cause the short circuit of the battery cell 20.

In some embodiments, the center line of the first through hole 2433 and the center line of the second through hole 2414 may also be collinear with each other. Moreover, the aperture R1 of the first through hole 2433 may also be designed to be smaller than an aperture R2 of the second through hole 2414. The aperture R2 of the second through hole 2414 refers to a diameter of the second through hole 2414 and may be designed to be range from 2 mm to 7 mm.

According to some embodiments of the present disclosure, with continued reference to FIG. 9, a thickness t1 of the conductive portion 2413 may be designed to be greater than a thickness t2 of the tab connection portion 2411 of the first current collector 241.

In an implementation where the output electrode connection portion of the first current collector 241 includes the connection portion 2412 and the conductive portion 2413, the electrode assembly 23, the first tab 231, the tab connection portion 2411 of the first current collector 241, the connection portion 2412, the conductive portion 2413, and the first output electrode are sequentially conducted to form a conductive path. It can be seen that the conductive portion 2413 can be used to transmit the current of the electrode assembly 23 to the first output electrode. The thickness t1 of the conductive portion 2413 ranges from 0.3 mm to 0.7 mm. The thickness t2 of the tab connection portion 2411 of the first current collector 241 ranges from 0.2 mm to 0.6 mm.

The thickness t1 of the conductive portion 2413 is designed to be greater than the thickness t2 of the tab connection portion 2411 of the first current collector 241, so as to ensure that the conductive portion 2413 has a strong overcurrent capability, i.e., the conductive portion 2413 can allow a large current to flow through and transmit the current to the first output electrode.

According to some embodiments of the present disclosure, the output electrode connection portion 2422 of the second current collector 242 is disposed close to an inner side surface of the housing 22. The output electrode connection portion 2422 of the second current collector 242 is electrically connected to the end cover 21 or the inner side surface of the housing 22. The housing 22 is electrically connected to the end cover 21.

The output electrode connection portion 2422 of the second current collector 242 may be welded and connected to the inner side surface of the housing 22. In this way, the electric energy of the battery cell 20 is conducted to the end cover 21 through the second tab 232, the tab connection portion 2421 of the second current collector 242, the output electrode connection portion 2422 of the second current collector 242, and the housing 22. In the example, laser may be emitted to the output electrode connection portion 2422 of the second current collector 242 and the housing 22 from an interior of the housing 22 in a direction perpendicular to the central axis of the electrode assembly 23, such that the output electrode connection portion 2422 of the second current collector 242 is welded to the inner side surface of the housing 22.

Certainly, in other embodiments of the present disclosure, the output electrode connection portion 2422 of the second current collector 242 may also be welded to and connected to the end cover 21. In this way, the second current collector 242 transmits the electric energy to the housing 22 through the end cover 21.

On the one hand, mounting stability of the current collection member 24 can be improved. On the other hand, the electrical connection between the current collection member 24 and the end cover 21 can be realized.

According to some embodiments of the present disclosure, the tab connection portion 2411 of the first current collector 241 is surrounded by the insulation plate 243.

That is, a distance occurs between an outer side surface of the tab connection portion 2411 of the first current collector 241 and an outer side surface of the insulation plate 243. The polarity of the first current collector 241 is different from that of the end cover 21, and the end cover 21 is electrically connected to the housing 22. Therefore, the polarity of the first current collector 241 is different from that of the housing 22. In order to prevent the occurrence of the short circuit caused by the contact between the first current collector 241 and the housing 22, an insulation plate 243 is located between the tab connection portion 2411 of the first current collector 241 and the inner side surface of the housing 22, so as to separate the tab connection portion 2411 of the first current collector 241 from the housing 22. With continued reference to FIG. 8, the second notch 2432 penetrates an outer edge of the insulation plate 243.

For example, the battery cell 20 is in a cylinder shape. The first notch 2431 and the tab connection portion 2411 of the first current collector 241 are each in a fan shape. The tab connection portion 2411 of the first current collector 241 has a first arc-shaped edge and a second arc-shaped edge. The second arc-shaped edge is further away from the central axis of the electrode assembly 23 than the first arc-shaped edge. The curvature radius of the second arc-shaped edge is r3. An outer contour on the insulation plate 243 corresponding to the second arc-shaped edge is an arc segment. A curvature radius of the arc segment is greater than the curvature radius r3 of the second arc-shaped edge. In this way, an outer edge of the first current collector 241 is surrounded by the insulation plate 243

In the embodiment, an edge of the tab connection portion 2411 of the first current collector 241 close to the housing 22 is surrounded by providing the insulation plate 243. In this way, reliable insulation between the first current collector 241 and the housing 22 can be ensured. Even when the battery cell 20 is vibrated or impacted, the first current collector 241 cannot be in direct contact with the inner side surface of the housing 22. As a result, short circuits between the first current collectors 241 with different polarities and the housing 22 can be prevented. Therefore, the operation reliability and safety of the battery cell 20 are improved.

According to some embodiments of the present disclosure, the output electrode connection portion 2422 of the second current collector 242 extends in a direction facing away from the electrode assembly 23. The output electrode connection portion 2422 of the second current collector 242 has two ends that are not closed.

In the example, the output electrode connection portion 2422 of the second current collector 242 protrudes relative to the tab connection portion 2421 of the second current collector 242.

When the housing 22 is cylindrical and the electrode assembly 23 is circular, the insulation plate 243 is circular, and the output electrode connection portion 2422 of the second current collector 242 is in an arc shape. Moreover, a radian of the output electrode connection portion 2422 of the second current collector 242 is greater than 0° and smaller than 360°. The output electrode connection portion 2422 of the second current collector 242 is electrically connected to the inner side surface of the housing 22. For example, the electrical connection is realized through welding or the like. For example, the tab connection portion 2421 and the output electrode connection portion 2422 of the second current collector 242 may be formed by bending an integrated thin plate structure. A thickness of the tab connection portion 2421 of the second current collector 242 may be the same as or different from a thickness of the output electrode connection portion 2422.

In the embodiment, the output electrode connection portion 2422 of the second current collector 242 protrudes from the tab connection portion 2421 of the second current collector 242. In this way, the connection between the second current collector 242 and the second tab and the connection between the second current collector 242 and the housing 22 can be effectively separated from each other.

According to other some embodiments of the present disclosure, the output electrode connection portion 2422 of the second current collector 242 extends in a direction facing away from the electrode assembly 23. The output electrode connection portion 2422 of the second current collector 242 is in a closed annular shape and extends in an entire circumferential direction of the housing 22.

When the battery cell 20 is in a cylinder shape, the shape of the output electrode connection portion 2422 of the second current collector 242 adapts to the shape of the housing 22, both being in an annular shape.

Compared with the output electrode connection portion 2422 of the second current collector 242 being in an arc shape, in the embodiment, the output electrode connection portion 2422 of the second current collector 242 is disposed along the entire circumference of the inner side surface of the housing 22. A plurality of connections may be provided between the output electrode connection portion 2422 of the second current collector 242 and the inner side surface of the housing 22. Moreover, the plurality of connections may be uniformly distributed around the central axis of the electrode assembly 23. In this way, the connection between the second current collector 242 and the housing 22 is made reliable.

According to some embodiments of the present disclosure, the insulation plate 243 is partially disposed between the output electrode connection portion 2422 of the second current collector 242 and the tab connection portion 2411 of the first current collector 241, to insulate the first current collector 241 from the second current collector 242.

In this way, when the output electrode connection portion 2422 of the second current collector 242 is in a closed annular shape and surrounds the circumferential direction of the insulation plate 243, the insulation plate 243 can separate the tab connection portion 2411 of the first current collector 241 from the output electrode connection portion 2422 of the second current collector 242, to prevent the short circuit caused by the tab connection portion 2411 of the first current collector 241 being in contact with the output electrode connection portion 2422 of the second current collector 242.

According to some embodiments of the present disclosure, as illustrated in FIG. 6, the end cover 21 has an annular protrusion 211 formed at a side of the end cover 21 facing towards an interior of the housing 22. The output electrode connection portion 2422 of the second current collector 242 is located between an inner side surface of the housing 22 and the annular protrusion 211.

In this way, the output electrode connection portion 2422 of the second current collector 242 is located between the housing 22 and the annular protrusion 211. The annular protrusion 211 can limit a movement of the output electrode connection portion 2422 of the second current collector 242 in the predetermined direction P. Further, it facilitates the reduction of the risk that the output electrode connection portion 2422 of the second current collector 242 is in contact with the first current collector 241 due to the vibration of the battery cell 20.

Here, by designing the annular protrusion 211 to be defined at a side of the end cover 21 facing towards the interior of the housing 22, when the battery cell 100 is placed in posture of the opening facing downwards, the annular protrusion 211 can play a role in supporting the electrode assembly 23 to facilitate the improvement in the safety performance of the battery cell 20. Moreover, the annular protrusion 211 can also limit the movement of the output electrode connection portion 2422 of the second current collector 242 in the predetermined direction P, thereby facilitating preventing the output electrode connection portion 2422 of the second current collector 242 from being in contact with the first current collector 241 due to the vibration of the battery cell 20.

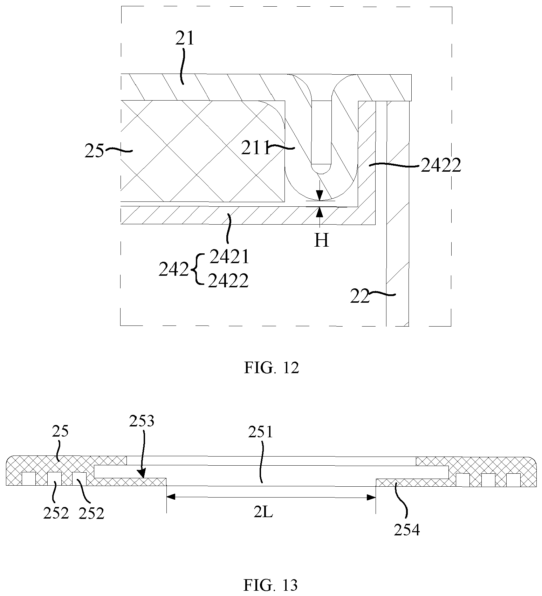

FIG. 12 is a partially enlarged view of B in FIG. 6. According to some embodiments of the present disclosure, as illustrated in FIG. 12, in an axial direction of the electrode assembly 23, a distance H between the annular protrusion 211 and the current collection member 24 is greater than or equal to 0.2 mm.

An exemplary assembly process of the battery cell 20 in the embodiment is as follows. The electrode assembly 23 is accommodated in the housing 22. The current collection member 24 is disposed in the housing 22. The output electrode connection portion 2422 of the second current collector 242 in the current collection member 24 is welded to the inner side surface of the housing 22. In addition, the end cover 21 covers the housing 22 and is sealingly connected to the housing 22.

Since the distance H between the annular protrusion 211 and the current collection member 24 is greater than or equal to 0.2 mm, during the assembly of the battery cell 20, when the end cover 21 covers the opening of the housing 22, the annular protrusion 211 of the end cover 21 does not abut against the current collection member 24, to ensure that the end cover 21 and the housing 22 can be sealingly connected to each other.

In a preferred embodiment, the distance H between the annular protrusion 211 and the current collection member 24 may be designed to be greater than or equal to 0.5 mm. In this way, it is further beneficial to avoid that the end cover 21 cannot cover the housing 22 because the annular protrusion 211 first abuts against the current collection member 24 when the end cover 21 is mounted in the housing 22.

According to some embodiments of the present disclosure, with continued reference to FIG. 6, the battery cell 20 further includes an insulation member 25 accommodated in the housing 22. The insulation member 25 is partially located between the end cover 21 and the tab connection portion 2411 of the first current collector 241.

The insulation member 25 may be made of a variety of materials, for example, plastic, rubber, and the like. When the insulation member 25 is made of plastic, its material may specifically be polyvinylidene fluoride (PVDF), polytetrafluoroethylene (PTFE), polypropylene (PP), polyethylene (PE), soluble polytetrafluoroethylene (PFA), polybutylene terephthalate (PBT), polyphenylene sulfide (PPS), phenolic plastic, and the like. When the insulation member 25 is made of rubber, the material of the insulation member 25 may specifically be silica gel.

The insulation member 25 may be specifically configured as that dielectric strength of the insulation member 25 is greater than or equal to 50kV/mm. Therefore, the dielectric strength of the insulation member 25 is high, thereby facilitating preventing the insulation member 25 from being broken down by a large current to cause the tabs with different polarities to be conducted with the output electrode. Moreover, the insulation member 25 may be designed to have a melting point greater than or equal to 130°C and a softening temperature greater than or equal to 100°C, so as to adapt to a high-temperature and high-pressure environment in the housing 22 of the battery cell 20.

By providing the insulation member 25, the tab connection portion 2411 of the first current collector 241 can be at least partially insulated from the end cover 21 by the insulation member 25. In this way, the short circuit caused by wrong conduction between the first current collector 241 and the end cover 21 is prevented.

According to some embodiments of the present disclosure, the insulation member 25 is of an annular structure. The insulation member 25 surrounds the first output electrode. The insulation member 25 is partially located between the end cover 21 and the tab connection portion 2421 of the second current collector 242.

It should be understood that, in the example, the insulation member 25 has a central through hole defined in a middle region of the insulation member 25. The first output electrode is at least partially located in the central through hole.

In this way, the insulation member 25 can insulate and protect at least a part of the first output electrode.

According to some embodiments of the present disclosure, with reference to FIG. 9, the thickness t2 of the tab connection portion 2411 of the first current collector 241 may be the same as a thickness t3 of the tab connection portion 2421 of the second current collector 242. Moreover, a surface of the tab connection portion 2411 of the first current collector 241 facing towards the end cover 21 and a surface of the tab connection portion 2421 of the second current collector 242 facing towards the end cover 21 are coplanar with each other.

In this way, a surface of the current collection member 24 facing towards the insulation member 25 is planar. Correspondingly, a surface of the insulation member 25 facing towards the electrode assembly 23 is also planar, so as to be tightly attached to a surface of the tab connection portion 2411 of the first current collector 241 facing towards the end cover 21 and a surface of the tab connection portion 2421 of the second current collector 242 facing towards the end cover 21.

An exemplary assembly process of the battery cell 20 in the embodiment may be as follows: mounting the electrode assembly 23 into the housing 22; mounting the current collection member 24 in the housing 22 and allowing the output electrode connection portion 2422 of the second current collector 242 in the current collection member 24 to be welded to the inner side surface of the housing 22; mounting the insulation member 25 in the housing 22, and allowing the surface of the insulation member 25 facing towards the electrode assembly 23 to be attached to a surface of each of the tab connection portions of the two current collectors facing away from the electrode assembly 23; and covering the end cover 21 on the housing 22. At this time, the end cover 21 is attached to the surface of the insulation member 25 facing away from the electrode assembly 23, and then the end cover 21 is welded to the housing 22.

In such an arrangement, the surface of the tab connection portion 2411 of the first current collector 241 facing towards the end cover 21 and the surface of the tab connection portion 2421 of the second current collector 242 facing towards the end cover 21 are coplanar with each other. Moreover, the surface of the insulation member 25 facing away from the housing 22 is planar. In this way, when the insulation member 25 is mounted in the housing 22, the insulation member 25 can be aligned with the mounting position without the need for positioning, which is convenient to install, thereby facilitating the improvement in the assembly efficiency. Moreover, when the surface of the insulation member 25 facing away from the electrode assembly 23 is also planar, it can be ensured that the end cover 21 covering the housing 22 can be tightly attached to the insulation member 25.

It can be understood that, in the embodiment, a surface of the tab connection portion 2411 of the first current collector 241 facing away from the end cover 21 and a surface of the tab connection portion 2421 of the second current collector 242 facing away from the end cover 21 are also coplanar with each other. On this basis, the surface of the insulation plate 243 facing away from the end cover 21 and the surface of the tab connection portion 2411 of the first current collector 241 facing away from the end cover 21 may also be coplanar with each other. Therefore, the surface of the current collection member 24 facing away from the end cover 21 is planar. In this way, during the assembly of the battery cell 20, after the electrode assembly 23 is installed in the housing 22, the current collection member 24 is mounted in the housing 22. Moreover, the surface of the current collection member 24 facing away from the end cover 21 is attached to an end of the electrode assembly 23 facing towards the opening. Since the surface of the current collection member 24 facing away from the end cover 21 is planar, after the current collection member 24 is installed into the housing 22, a probability of skew of the current collection member 24 is low.

According to some embodiments of the present disclosure, when the battery cell 20 has an insulation member 25, referring to FIG. 6, the insulation member 25 has a central through hole 251 in the middle region of the insulation member 25. The output electrode connection portion of the first current collector 241 extends into the central through hole 251.

When the output electrode connection portion of the first current collector 241 includes the connection portion 2412 and the conductive portion 2413, the connection portion 2412 extends into the central through hole 251, and the conductive portion 2413 is located in the central through hole 251.

In some embodiments, as illustrated in FIG. 6, a gap occurs between an outer side surface of the connection portion 2412 and a hole wall of the central through hole 251. The outer side surface of the connection portion 2412 is coplanar with a peripheral side surface of the tab connection portion 2411 of the first current collector 241. In this way, when the tab connection portion 2411 of the first current collector 241 includes the first arc-shaped edge and the second arc-shaped edge that are arranged in the radial direction of the tab connection portion 2411 of the first current collector 241, the curvature radius r1 of the first arc-shaped edge is smaller than a radius L of the central through hole 251. Therefore, the insulation member 25 is caused to surround an outer side of the output electrode connection portion of the first current collector 241. The radius L of the central through hole 251 ranges from 5 mm to 10 mm.

In response to the radius L of the central through hole 251 being designed to be smaller than r1, during the assembly of the battery cell 20, after the current collection member 24 is installed in the housing 22, the insulation member 25 is mounted in the housing 22. Because L is smaller than r1, the insulation member 25 is overlapped on the output electrode connection portion of the first current collector 241 and cannot be attached to the tab connection portion 2411 of the first current collector 241. Further, the end cover 21 is caused not to cover the opening of the housing 22.

Thus, it can be understood that by designing the output electrode connection portion of the first current collector 241 to extend into the central through hole 251, the occurrence of interference between the insulation member 25 and the output electrode connection portion of the first current collector 241 is avoided. Moreover, it is ensured that the insulation member 25 does not overlap the output electrode connection portion of the first current collector 241 when being installed in the housing 22. Therefore, it is helpful to ensure that the end cover 21 can tightly cover the opening of the housing 22.

According to some embodiments of the present disclosure, an orthographic projection of the output electrode connection portion 2422 of the second current collector 242 on the end cover 21 does not overlap with an orthographic projection of the central through hole on the end cover 21. Moreover, a hole wall of the central through hole 251 is closer to a central axis of the electrode assembly 23 than an inner side surface of the output electrode connection portion 2422 of the second current collector 242.

When the tab connection portion 2421 of the second current collector 242 includes a third arc-shaped edge and a fourth arc-shaped edge that are arranged in the radial direction of the tab connection portion 2421 of the second current collector 242, the curvature radius r2 of the third arc-shaped edge is greater than the radius L of the central through hole 251. In this way, the insulation member 25 is caused to protrude towards the central axis of the electrode assembly 23 than the tab connection portion 2421 of the second current collector 242.

In the embodiment, the insulation member 25 partially protrudes from the third arc-shaped edge of the second current collector 242 and partially extends between the insulation plate 243 and the electrode terminal 233. In such a design, the insulation member 25 can completely isolate the tab connection portion 2421 of the second current collector 242 from the electrode terminal 233, thereby greatly reducing the risk of short circuit of the battery cell 20 caused by the conduction of the second current collector 242 and the electrode terminal 233.

According to some embodiments of the present disclosure, he insulation member 25 has an abutting surface 253. The abutting surface 253 and a hole wall of the central through hole 251 jointly define a step portion 254. The abutting surface 253 abuts against a surface of the first output electrode facing towards the electrode assembly 23. The step portion 254 is located between the first output electrode and the tab connection portion 2421 of the second current collector 242.

Therefore, not only can the insulation member 25 insulate the end cover 21 from the tab connection portion 2411 of the first current collector 241, but the step portion 254 of the insulation member 25 can also insulate the first output electrode from the tab connection portion 2421 of the second current collector 242. Moreover, the step portion 254 can provide a stable support for the first output electrode.

FIG. 13 is a schematic cross-sectional view of an insulation member 25 in a battery cell 20 according to some embodiments of the present disclosure. According to some embodiments of the present disclosure, as illustrated in FIG. 13, the insulation member 25 may be provided with a plurality of weight reduction portions 252.

The weight reduction portion 252 may specifically be a weight reduction hole. Moreover, the weight reduction hole may be a through hole passing through the insulation member 25 in a thickness direction of the insulation member 25, or may be a blind hole. Alternatively, as an alternative embodiment, the weight reduction portion 252 may also be an annular groove, and the annular groove is defined at a surface of the insulation member 25 facing away from the end cover 21.

By providing the weight reduction portion 252, a weight of the insulation member 25 can be reduced. In this way, an amount of an insulation material required by the insulation member 25 can be decreased. Therefore, the cost can be lowered to some extent.

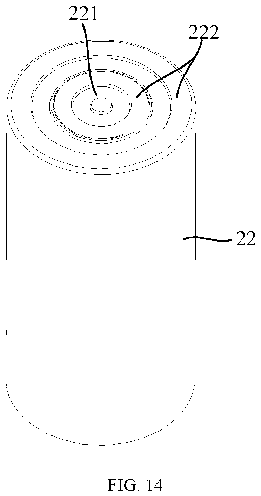

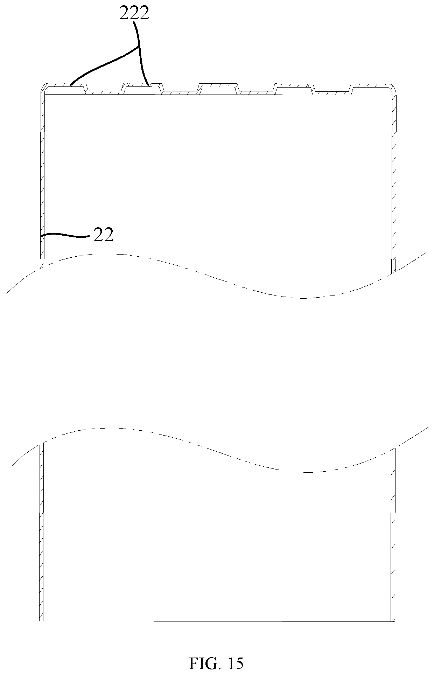

FIG. 14 is a schematic structural view of a housing 22 in a battery cell 20 according to some embodiments of the present disclosure. FIG. 15 is a schematic cross-sectional view of the housing 22 shown in FIG. 14. According to some embodiments of the present disclosure, referring to FIG. 14 and FIG. 15, the housing 22 has an end wall 221. The end wall 221 faces towards the opening. The end wall 221 protrudes out of the housing 22 to form a reinforcement rib 222.

The end wall 221 of the housing 22 may be stamped by using a stamping process. In this way, the end wall 221 partially protrudes out of the housing 22, causing the formation of the reinforcement rib 222 on the end wall 221. A number of the reinforcement ribs 222 is non-limited. For example, in FIG. 14, three reinforcement ribs 222 protrude from the end wall 221 and are formed on the end wall 221. The reinforcement ribs 222 may also be in an annular shape. In this way, strength of the end wall 221 is uniform.

The reinforcement rib 222 is formed on the end wall 221 directly facing towards the opening of the housing 22. In this way, strength of the housing 22 can be enhanced. Further, a decrease in a risk of serious deformation of the end wall 221 caused by gas production during operation of the battery cell 20 is facilitated. Furthermore, a reduction in the influence of electrolyte deposition on a cycle life of the battery cell 20 can be beneficial. Certainly, in other embodiments of the present disclosure, a reinforcement block may also be provided at a surface of the end wall 221 facing towards an exterior of the housing 22 to enhance the strength of the housing 22.

According to some embodiments of the present disclosure, as illustrated in FIG. 6, FIG. 8, and FIG. 9, the electrode assembly 23 further includes a body portion. The first tab is connected to the body portion. The first tab has an unfolded state and a flattened state. The first tab in the unfolded state is unbent relative to the body portion, and the first tab in the flattened state is bent relative to the body portion. Moreover, the first tab 231 in the unfolded state has a height h satisfying: r3+h≥D+N, in such a manner that each first tab 231 in the flattened state is in contact with the tab connection portion 2411 of the first current collector 241, where r3 represents a curvature radius of the second arc-shaped edge of the tab connection portion 2411 of the first current collector 241, D represents a diameter of the electrode assembly 23, and N represents a positive number.

In the example shown in FIG. 8, the electrode assembly 23 may have a plurality of first tabs 231 and a plurality of second tabs 232. The plurality of first tabs 231 and the plurality of second tabs 232 are symmetrical with each other relative to the center of the center hole 234. Moreover, an outer side surface of each of a first tab 231 and a second tab 232 in the battery cells 20 that are farthest away from the center hole 234 and are at an outermost ring of the battery cells 20 is coplanar with an outer surface of the electrode assembly 23.

Moreover, when the current collection member 24 is mounted in the housing 22, an outer side surface of the current collection member 24 is coplanar with the outer surface of the electrode assembly 23. In this way, since the tab connection portion 2411 of the first current collector 241 is embedded in the first notch 2431, a distance exists between the tab connection portion 2411 of the first current collector 241 and the outer side surface of the insulation plate 243, as illustrated in FIG. 6, the tab connection portion 2411 of the first current collector 241 cannot cover all the first tabs 231. In addition, the first tabs 231 at a part of outer rings close to an edge of the electrode assembly 23 are covered by the insulation plate 243.

By taking the first tab 231 farthest from the central hole 234 and at the outermost ring as an example, the height of the first tab 231 in the unfolded state is h. It is assumed that in an ideal state, the first tab 231 at the outermost ring is in the flattened state after being flattened and extends completely in the predetermined direction. At this time, an extending length of the first tab 231 at the outermost ring in the predetermined direction is h.

When r3+h=D, it can be indicated that the first tab 231 at the outermost ring, when being in the flattened state, is in contact with the third arc-shaped edge of the tab connection portion 2411 of the first current collector 241, to transmit the current of the electrode assembly 23 to the first current collector 241. When r3+h-D>0, it can be indicated that an orthographic projection of the first tab 231 at the outermost ring, when being in the flattened state, extending on the tab connection portion 2411 of the first current collector 241 falls on the tab connection portion 2411. At this time, the first tab 231 and the tab connection portion 2411 of the first current collector 241 can reliably realize conduction through their contact.

In summary, in the embodiment, a height h of the first tab 231 in the unfolded state is designed to satisfy: r3+h≥D+N, to ensure that the first tab 231 at the outermost ring on the electrode assembly 23 can be electrically connected to the tab connection portion 2411 of the first current collector 241 when being in a flattened state. In this way, all the first tabs 231 on the electrode assembly 23 can be each conducted with the first current collector 241.

Here, N is non-limited. According to some embodiments of the present disclosure, 1mm≤N≤3mm.

In this case, when a sum of r3 and h exceeds 1 mm than the diameter D of the electrode assembly 23. In this way, in a case where the diameter D of the electrode assembly 23 and the curvature radius r3 of the second arc-shaped edge of the tab connection portion 2411 of the first current collector 241 are fixed, h may be in a great range. Further, it facilitates ensuring that the first tab 231 at the outermost ring can be in contact with and electrically connected to the tab connection portion 2411 of the first current collector 241 after being flattened. Moreover, even if the first tab 231 at the outermost ring cannot reach an ideal state when being in the flattened state, the first tab 231 in the flattened state can be bent, so the first tab 231 at the outermost ring in the flattened state has a size in the predetermined direction that is smaller than h but has a great numerical value, so as to ensure that the first tab 231 at the outermost ring can be in contact with the first current collector 241 after being flattened.

According to some embodiments of the present disclosure, referring to FIG. 6, the electrode assembly 23 has a center hole 234 defined at a middle of the electrode assembly 23. A minimum distance d' between the first tab 231 in a flattened state and the second tab 232 in the flattened state is greater than or equal to an aperture Φ of the center hole 234.

The electrode assembly 23 has the plurality of first tabs 231 and the plurality of second tabs 232. In order to ensure that the first tab 231 and the second tab 232 allow for an inflow of great current without fusion, the plurality of first tabs 231 is flattened by kneading. The plurality of first tabs 231 is laminated together and is connected to the tab connection 2411 of the first current collector 241. At this time, the first tab 231 is in the flattened state. Similarly, the plurality of second tabs 232 are flattened by kneading. The plurality of second tabs 232 is laminated together and connected to the tab connection portion 2421 of the second current collector 242. At this time, the second tab 232 is in the flattened state.

The minimum distance d' between the first tab 231 in the flattened state and the second tab 232 in the flattened state specifically refers to a distance between a first tab 231 closest to the center hole 234 and in the flattened state and a second tab 232 closest to the center hole 234 and in the flattened state in the predetermined direction. The d' may specifically be designed to be greater than or equal to 4 mm and smaller than or equal to 9 mm.

By designing d' to be greater than or equal to the aperture Φ of the center hole 234, it indicates that the distance between the first tab 231 closest to the center hole 234 and in the flattened state and the second tab 232 closest to the center hole 234 and in the flattened state is greater than or equal to the aperture Φ of the center hole 234. In this way, each of the first tab 231 closest to the center hole 234 and the second tab 232 closest to the center hole 234 does not extend into the center hole 234. Therefore, the battery cell 20 is prevented from having a short circuit due to contact between the first tab 231 closest to the center hole 234 and the second tab 232 closest to the center hole 234.

According to some embodiments of the present disclosure, a root surface of the first tab 231 connected to a first electrode plate of the electrode assembly 23 and a root surface of the second tab 232 connected to a second electrode plate of the electrode assembly 23 each have an adhesive layer.

The electrode assembly 23 includes a first electrode plate, a separator, and a second electrode plate that are laminated to each other. The first electrode plate and the second electrode plate have opposite polarities. An separator is located between a first electrode plate and an adjacent second electrode plate. The electrode assembly 23 may be formed into a wound structure by using a winding process or may be formed into a laminated structure by using a lamination process.

In the embodiment, by designing the adhesive layer to be provided at the root of the first tab 231 connected to the first electrode plate and provided at the root of the second tab 232 connected to the second electrode plate, an improvement in the strength of each of the first tab 231 and the second tab 232 is facilitated. In this way, a short circuit caused by the first tab 231 being folded between the second electrode plate and the separator can be prevented, or a short circuit caused by the second tab 232 being folded between the first electrode plate and the separator can be prevented.

According to some embodiments of the present disclosure, the insulation plate 243 is integrally formed through injection molding with the first current collector 241 and the second current collector 242.

For example, the insulation plate 243 may be made of a plastic material, which is not limited to materials having excellent thermoplasticity and insulativity such as polyethylene (PE) and liquid crystal polymer (LCP). During injection molding, the first current collector 241 and the second current collector 242 may be placed in an injection mold, then an injection molding liquid is poured, and the insulation plate 243 is formed after the liquid is solidified. In the example, the output electrode connection portion of the first current collector 241 includes a connection portion 2412 and a conductive portion 2413. When the conductive portion 2413 is located between the first output electrode and the insulation plate 243, the conductive portion 2413 is attached to the insulation plate 243. Moreover, the insulation plate 243 can provide the conductive portion 2413 with a stable support, to prevent the conductive portion 2413 from being deformed.

The embodiment can reduce processing and assembly difficulty of each component in the current collection member 24 through integrally injection molding, thereby improving the production efficiency of the battery cell 20. Moreover, firmness of each of the first current collector 241 and the second current collector 242 disposed at the insulation plate 243 can be improved.

By taking the cylindrical battery cell 20 as an example, a specific embodiment of the battery cell 20 in the present disclosure is provided below in conjunction with FIG. 3 to FIG. 15. The battery cell 20 includes a housing 22, an end cover 21, an electrode assembly 23, and a current collection member 24. The housing 22 has an opening. The end cover 21 is configured to cover the opening. The end cover 21 has an opening hole. The opening hole is mounted with a first output electrode. The first output electrode may be an electrode terminal 233. The end cover 21 is used as a second output electrode.

The current collection member 24 includes an insulation plate 243, a first current collector 241, and a second current collector 242, which can be integrally formed by injection molding. The first current collector 241 and the second current collector 242 are insulated from each other by the insulation plate 243.

The first current collector 241 includes a tab connection portion 2411, a connection portion 2412, and a conductive portion 2413. The tab connection portion 2411 is connected to a first tab 231 of the electrode assembly 23. The connection portion 2412 has an end connected to the peripheral side surface of the tab connection portion 2411 of the first current collector 241 and another end connected to the conductive portion 2413. Moreover, the conductive portion 2413 is located between the insulation plate 243 and the first output electrode, and is electrically connected to the first output electrode.

The second current collector 242 includes a tab connection portion 2421 and an output electrode connection portion 2422 that are connected to each other. The tab connection portion 2421 of the second current collector 242 is connected to the second tab 232 of the electrode assembly 23. The output electrode connection portion 2422 of the second current collector 242 is bent towards the end cover 21 relative to the tab connection portion 2421 of the second current collector 242. The output electrode connection portion 2422 of the second current collector 242 is in a circular ring shape and surrounds the outer side of the tab connection portion 2421 of the second current collector 242. The output electrode connection portion 2422 of the second current collector 242 is welded to the inner side surface of the housing 22.

The insulation plate 243 has a first notch 2431 and a second notch 2432 that are spaced apart from each other in the circumferential direction of the insulation plate 243. The tab connection portion 2411 of the first current collector 241 is embedded in the first notch 2431 to be fitted with the first notch 2431. Moreover, the edge of the tab connection portion 2411 of the first current collector 241 is surrounded by the insulation plate 243. The tab connection portion 2421 of the second current collector 242 is embedded in the second notch 2432 and fitted with the second notch 2432. The first notch 2431 and the second notch 2432 are each in a fan shape

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all of the technical features in the technical solutions described in the foregoing embodiments. These modifications or equivalent replacements, which do not depart the essence of corresponding technical solutions from the scope of the technical solutions of the embodiments of the present disclosure, shall fall within the scope of the claims and the specification of the present disclosure. In particular, the technical features mentioned in individual embodiments can be combined arbitrarily without any structural conflict. The present disclosure is not limited to the particular embodiments disclosed herein, and includes all technical solutions falling within the scope of the claims.

## Claims

1. A battery cell, comprising:
an electrode assembly having a first tab and a second tab that have opposite polarities;
a first output electrode and a second output electrode that have opposite polarities, the first output electrode and the second output electrode being configured to output electric energy of the battery cell; and
a current collection member comprising an insulation plate, a first current collector, and a second current collector, the insulation plate having a first notch and a second notch that are spaced apart from each other in a circumferential direction of the insulation plate, the first current collector being at least partially accommodated in the first notch and electrically connecting the first tab with the first output electrode, the second current collector being at least partially accommodated in the second notch and electrically connecting the second tab with the second output electrode, wherein the insulation plate insulates the first current collector from the second current collector.

2. The battery cell according to claim 1, wherein:
each of the first current collector and the second current collector comprises a tab connection portion and an output electrode connection portion;
the tab connection portion of the first current collector is embedded in the first notch and electrically connected to the first tab;
the output electrode connection portion of the first current collector is electrically connected to the first output electrode;
the tab connection portion of the second current collector is embedded in the second notch and electrically connected to the second tab; and
the output electrode connection portion of the second current collector is electrically connected to the second output electrode.

3. The battery cell according to claim 2, wherein a minimum spacing d between the tab connection portion of the first current collector and the tab connection portion of the second current collector is greater than 0 mm.

4. The battery cell according to claim 3, wherein:
each of the first notch and the second notch is in a fan shape;
the tab connection portion of the first current collector is matched with the first notch; and
the tab connection portion of the second current collector is matched with the second notch.

5. The battery cell according to claim 4, wherein the tab connection portion of the first current collector and the tab connection portion of the second current collector are homocentric.

6. The battery cell according to claim 4 or 5, wherein:
the tab connection portion of the first current collector comprises a first arc-shaped edge and a second arc-shaped edge that are arranged in a radial direction of the tab connection portion of the first current collector;
the first arc-shaped edge is closer to a central axis of the electrode assembly than the second arc-shaped edge;
a curvature radius of the first arc-shaped edge is r1; and
r1 and d satisfy: d≥2/3*r1.

7. The battery cell according to any one of claims 4 to 6, wherein:
the tab connection portion of the second current collector comprises a third arc-shaped edge and a fourth arc-shaped edge that are arranged in a radial direction of the tab connection portion of the second current collector;
the third arc-shaped edge is closer to a central axis of the electrode assembly than the fourth arc-shaped edge;
a curvature radius of the third arc-shaped edge is r2; and
r2 and d satisfy: d≥2/3*r2.

8. The battery cell according to any one of claims 2 to 5, further comprising a housing and an end cover, the housing having an opening, and the end cover being configured to cover the opening, wherein:
the electrode assembly is accommodated in the housing; and
the first output electrode is mounted at the end cover and insulated from the end cover, the second output electrode being the end cover.

9. The battery cell according to claim 8, wherein the first output electrode is mounted in a central region of the end cover.

10. The battery cell according to claim 9, wherein:
an orthographic projection of the first output electrode on the end cover and an orthographic projection of the output electrode connection portion of the second current collector on the end cover have an overlapping region; and
the output electrode connection portion of the first current collector is protruded relative to the tab connection portion of the first current collector.

11. The battery cell according to claim 10, wherein:
the output electrode connection portion of the first current collector comprises a connection portion and a conductive portion;
the connection portion has an end connected to a peripheral side surface of the tab connection portion of the first current collector and another end connected to the conductive portion; and
the conductive portion is located between the insulation plate and the first output electrode.

12. The battery cell according to claim 11, wherein a central region of the insulation plate protrudes towards the conductive portion than a peripheral region of the insulation plate and is supported at the conductive portion.

13. The battery cell according to claim 11 or 12, wherein:
the insulation plate has a first through hole defined in a central region of the insulation plate, the conductive portion has a second through hole, and the electrode assembly has a center hole defined in a middle of the electrode assembly;
an orthographic projection of the first through hole on the end cover in an axial direction of the electrode assembly at least partially overlaps with an orthographic projection of the second through hole on the end cover in the axial direction of the electrode assembly; and/or the orthographic projection of the first through hole on the end cover in the axial direction of the electrode assembly at least partially overlaps with an orthographic projection of the center hole on the end cover in the axial direction of the electrode assembly.

14. The battery cell according to claim 13, wherein:
the electrode assembly further comprises a body portion;
the first tab and the second tab are connected to the body portion;
the first tab and the second tab are bent relative to the body portion and are in a flattened state; and
an orthographic projection of each of the first tab and the second tab in the flattened state on the end cover does not overlap with the orthographic projection of the first through hole on the end cover.

15. The battery cell according to any one of claims 11 to 14, wherein a thickness of the conductive portion is greater than a thickness of the tab connection portion of the first current collector.

16. The battery cell according to any one of claims 8 to 15, wherein:
the output electrode connection portion of the second current collector is close to an inner side surface of the housing;
the output electrode connection portion of the second current collector is electrically connected to the end cover or the inner side surface of the housing; and
the housing is electrically connected to the end cover.

17. The battery cell according to claim 16, wherein the tab connection portion of the first current collector is surrounded by the insulation plate.

18. The battery cell according to claim 16 or 17, wherein the output electrode connection portion of the second current collector extends in a direction facing away from the electrode assembly, and wherein the output electrode connection portion of the second current collector has two unclosed ends.

19. The battery cell according to claim 16 or 17, wherein:
the output electrode connection portion of the second current collector extends in a direction facing away from the electrode assembly; and
the output electrode connection portion of the second current collector is in a closed annular shape and extends in an entire circumferential direction of the housing.

20. The battery cell according to claim 19, wherein the insulation plate is partially disposed between the output electrode connection portion of the second current collector and the tab connection portion of the first current collector, to insulate the first current collector from the second current collector.

21. The battery cell according to any one of claims 8 to 20, wherein:
the end cover has an annular protrusion formed at a side of the end cover facing towards an interior of the housing; and
the output electrode connection portion of the second current collector is located between an inner side surface of the housing and the annular protrusion.

22. The battery cell according to claim 21, wherein in an axial direction of the electrode assembly, a distance between the annular protrusion and the current collection member is greater than or equal to 0.2 mm.

23. The battery cell according to any one of claims 11 to 22, further comprising an insulation member accommodated in the housing, the insulation member being partially located between the end cover and the tab connection portion of the first current collector.

24. The battery cell according to claim 23, wherein the insulation member is of an annular structure, surrounds the first output electrode, and is partially located between the end cover and the tab connection portion of the second current collector.

25. The battery cell according to claim 24, wherein:
the tab connection portion of the first current collector and the tab connection portion of the second current collector have a same thickness; and
a surface of the tab connection portion of the first current collector facing towards the end cover and a surface of the tab connection portion of the second current collector facing towards the end cover are coplanar with each other.

26. The battery cell according to any one of claims 23 to 25, wherein:
the insulation member has a central through hole defined in a middle region of the insulation member; and
the output electrode connection portion of the first current collector extends into the central through hole.

27. The battery cell according to any one of claims 23 to 26, wherein:
an orthographic projection of the output electrode connection portion of the second current collector on the end cover does not overlap with an orthographic projection of the central through hole on the end cover; and
a hole wall of the central through hole is closer to a central axis of the electrode assembly than an inner side surface of the output electrode connection portion of the second current collector.

28. The battery cell according to any one of claims 23 to 27, wherein:
the insulation member has an abutting surface;
the abutting surface and a hole wall of the central through hole jointly define a step portion;
the abutting surface abuts against a surface of the first output electrode facing towards the electrode assembly; and
the step portion is located between the first output electrode and the tab connection portion of the second current collector.

29. The battery cell according to any one of claims 8 to 28, wherein the housing has an end wall facing towards the opening, the end wall protruding out of the housing to form a reinforcement rib.

30. The battery cell according to any one of claims 4 to 29, wherein:
the electrode assembly further comprises a body portion;
the first tab is connected to the body portion and has an unfolded state and a flattened state, the first tab in the unfolded state being unbent relative to the body portion, and the first tab in the flattened state being bent relative to the body portion; and
the first tab in the unfolded state has a height h satisfying: r3+h≥D+N, in such a manner that each first tab in the flattened state is in contact with the tab connection portion of the first current collector,
wherein the tab connection portion of the first current collector comprises a second arc-shaped edge facing away from a central axis of the electrode assembly,
wherein r3 represents a curvature radius of the second arc-shaped edge, D represents a diameter of the electrode assembly, and N represents a positive number.

31. The battery cell according to claim 30, wherein 1mm≤N≤3mm.

32. The battery cell according to any one of claims 1 to 31, wherein:
the electrode assembly has a center hole defined at a middle of the electrode assembly; and
a minimum distance d' between the first tab in a flattened state and the second tab in the flattened state is greater than or equal to an aperture of the center hole.

33. The battery cell according to any one of claims 1 to 32, wherein the insulation plate is integrally formed through injection molding with the first current collector and the second current collector.

34. A battery, comprising the battery cell according to any one of claims 1 to 33.

35. An electric device, comprising the battery according to claim 34, wherein the battery is configured to supply electric energy.
